# EUROPÄISCHE PATENTSCHRIFT

(11) **EP 2 436 851 B1**
(45) Veröffentlichungstag und Bekanntmachung des Hinweises auf die Patenterteilung: **22.04.2020**
(21) Anmeldenummer: 11178867.5
(22) Anmeldetag: 25.08.2011
(51) Int. Cl.: E04F 15/02, E04B 1/76, F16B 13/04, F16B 1/00, E04F 13/08

(54) **Befestigungselement, Befestigungssystem sowie Fassadensystem**
Fixing element, fixing system and facade system
Elément de fixation, système de fixation et système de façades

(30) Priorität: 04.10.2010 DE 102010047242
(43) Veröffentlichungstag der Anmeldung: 04.04.2012
(73) Patentinhaber: STO SE & Co. KGaA, 79780 Stühlingen (DE)
(72) Erfinder: Riewe, Roger, 8010 Graz (AT); Oswald, Ferdinand, 8020 Graz (AT); Lüking, Tim, 8010 Graz (AT); Hengel, Katharina Maria, 8051 Graz (AT); Volgger, Katharina, 39040 Vahrn (IT); Reynolds, Patrick Colin Alan, 9900 Lienz (AT); Martinelli, Michael, 8041 Graz (AT); Wiedenbauer, Walter, 9470 St. Paul (AT); Rauter, Ewald, 9520 Annenheim (AT); Weier, Andreas, 78647 Trossingen (DE)
(74) Vertreter: Gottschalk, Matthias

(56) Entgegenhaltungen:
- EP-A1- 2 365 156
- EP-A2- 1 182 361
- EP-A2- 2 288 769
- DE-A1- 10 158 108
- DE-C1- 4 218 213
- DE-U1- 8 808 787
- DE-U1- 20 001 405

## Beschreibung

### Technisches Gebiet

Die Erfindung betrifft ein Fassadensystem mit einem Befestigungselement zur Befestigung wenigstens eines platten- oder profilförmigen Bauelementes an einem bauseitigen Untergrund mit den Merkmalen des Oberbegriffs des Anspruchs 1. Ein solches Befestigungselement umfasst einen tellerartigen ersten Befestigungsabschnitt und einen hieran angesetzten schaftartigen zweiten Befestigungsabschnitt zur Aufnahme eines Verbindungsmittels.

Ferner betrifft die Erfindung ein Verfahren zur Herstellung des Fassadensystems.

### Stand der Technik

Ein gattungsgemäßes Befestigungselement geht aus der DE 200 11 162 U1 hervor. Es dient der Befestigung eines Wärmedämmelements an einer Gebäudewand. Das Befestigungselement ist als Tellerdübel mit einem Schaft zur Aufnahme einer Schraube und einem hieran angesetzten Ringflansch ausgebildet. Zur Befestigung eines Gegenstandes an dem Wärmedämmelement weist das Befestigungselement eine Aufnahmebohrung auf, in welche ein weiteres Befestigungs- bzw. Verbindungselement, beispielsweise eine weitere Schraube, einsetzbar ist. Dabei gehen der Tellerdübel und das weitere Befestigungs- bzw. Verbindungselement eine kraft- und/oder formschlüssige Verbindung ein, so dass der am Wärmedämmelement zu befestigende Gegenstand über den Tellerdübel verankert ist. Bei dem am Wärmedämmelement zu befestigenden Gegenstand handelt es sich vorzugsweise um eine Unterkonstruktion für eine Fassadenverkleidung.

Aus der DE 88 08 787 U1 ist ferner eine Befestigungsvorrichtung für Bauteile bekannt, die eine gelenkig gelagerte Fußplatte umfasst, die mittels Haftbänder, die als Klettverschluss ausgebildet sind, mit einem Bauteil verbindbar ist.

Der DE 101 58 108 A1 ist darüber hinaus eine Befestigungsvorrichtung zu entnehmen, die alle Merkmale des Oberbegriffs des Anspruchs 1 aufweist.

Der vorliegenden Erfindung liegt die Aufgabe zugrunde, ein Befestigungselement der vorstehend genannten Art derart weiterzubilden, dass ein platten- oder profilförmiges Bauelement einfach und schnell an einem bauseitigen Untergrund befestigbar und zum nachträglichen Ausrichten oder Austauschen schnell und einfach wieder lösbar ist. Dabei soll das Befestigungselement zugleich ein sicheres Halten des platten- oder profilförmigen Bauelements am bauseitigen Untergrund gewährleisten.

Als bauseitiger Untergrund wird vorliegend eine beliebige Gebäudeaußenwand, Gebäudeinnenwand, Decken- oder Bodenfläche bezeichnet, so dass die Befestigungsebene sowohl vertikal als auch horizontal verlaufen kann. Darüber hinaus kann die Befestigungsebene in einem beliebigen Winkel geneigt sein oder bogenförmig verlaufen. Ferner kann der bauseitige Untergrund massiv oder als Skelettkonstruktion ausgebildet sein. Soweit von einem platten- oder profilförmigen Bauelement die Rede ist, umfasst diese Bezeichnung auch flexible Bauelemente, wie beispielsweise Matten oder Bänder.

Die vorstehend genannte Aufgabe wird gelöst durch ein Fassadensystem mit den Merkmalen des Anspruchs 1. Ferner wird ein Verfahren zur Herstellung des Fassadensystems mit den

Merkmalen des Anspruchs 13 vorgeschlagen. Vorteilhafte Weiterbildungen sind in den jeweiligen Unteransprüchen angegeben.

### Offenbarung der Erfindung

Das vorgeschlagene Fassadensystem umfasst ein Befestigungselement zur Befestigung wenigstens eines platten- oder profilförmigen Bauelementes an einem bauseitigen Untergrund, wobei das Befestigungselement einen tellerartigen ersten Befestigungsabschnitt und einen hieran angesetzten schaftartigen zweiten Befestigungsabschnitt zur Aufnahme eines Verbindungsmittels umfasst. Erfindungsgemäß weist die dem schaftartigen zweiten Befestigungsabschnitt abgewandte Seite des tellerartigen ersten Befestigungsabschnitts stift-, pilzkopf-, haken- und/oder schlingenförmige Verbindungselemente zur kraft- und/oder formschlüssigen Verbindung mit korrespondierenden Verbindungselementen an einem platten- oder profilförmigen Bauelement auf.

Bei dem wenigstens einen platten- oder profilförmigen Bauelement handelt es sich vorzugsweise um ein Fassadenelement oder eine Unterkonstruktion für ein solches Fassadenelement, das es an einem bauseitigen Untergrund festzulegen gilt. Erfindungsgemäß dient das Befestigungselement zugleich der Befestigung eines weiteren Bauelements, und zwar einer Dämmplatte, beispielsweise einer Wärmedämmplatte. Hierzu wird das Befestigungselement wie ein herkömmlicher Tellerdübel in die Wärmedämmplatte eingesetzt und mit einem Verbindungsmittel, beispielsweise einer Schraube, im Untergrund verankert. Über den tellerartigen Befestigungsabschnitt des Befestigungselements wird dabei die Wärmedämmplatte an den Untergrund gedrückt. Die stift-, pilzkopf-, haken- und/oder schlingenförmigen Verbindungselemente auf der dem Schaft abgewandten Seite des tellerartigen Befestigungsabschnitts können dann mit korrespondierenden Verbindungselementen am zu befestigenden platten- oder profilförmigen Bauelement verbunden werden. Als korrespondierende Verbindungsmittel werden im Sinne der vorliegenden Erfindung gleichartige oder gegengleich ausgebildete Verbindungselemente angesehen, die eine kraft- und/oder formschlüssige Verbindung ermöglichen. Dementsprechend können nach Art einer Klettverbindung die Verbindungselemente des Befestigungselements hakenförmig und die des zu befestigenden platten- oder profilförmigen Bauelements schlingenförmig oder umgekehrt ausgebildet sein. Ferner können die Verbindungselemente der zu verbindenden Teile gleichartig, beispielsweise pilzkopf- oder hakenförmig, ausgebildet sein, so dass sich die Verbindungselemente beim Zusammenfügen formschlüssig hintergreifen. Um ein Hintergreifen zu ermöglichen, sind die Verbindungselemente vorzugsweise zumindest geringfügig elastisch verformbar ausgebildet. Alternativ oder ergänzend können stiftförmige Verbindungselemente vorgesehen sein, die mit gleichartigen Verbindungselementen am zu befestigenden Bauelement eine reibschlüssige Verbindung eingehen. Das Befestigungselement und/oder das zu befestigende Bauelement können darüber hinaus jeweils eine Kombination aus verschiedenartig ausgebildeten Verbindungselementen aufweisen, die jeweils mit gleichartigen und/oder gegengleich ausgebildeten Verbindungselementen am jeweils anderen Teil kraft- und/oder formschlüssig zusammenwirken. Das heißt, dass an einem Teil beispielsweise sowohl haken- als auch schlingenförmige Verbindungselemente ausgebildet sein können, die mit haken- und/oder schlingenförmigen Verbindungselementen am jeweils anderen Teil zusammenwirken.

Um die kraft- und/oder formschlüssige Verbindung zu erzielen, wird das platten- oder profilförmige Bauelement bevorzugt in der Weise an das Befestigungselement angelegt, dass sich die jeweiligen Verbindungselemente überdecken. Dann wird durch Andrücken die eigentliche Verbindung bewirkt. Beim Andrücken schieben sich die Verbindungselemente beider Teile ineinander, wobei ein Reibschluss und/oder ein Formschluss erzielt wird bzw. werden. Zur Erzielung eines Formschlusses müssen die Verbindungselemente derart ausgebildet sein, dass sie einander hintergreifen. Dies ist beispielsweise bei pilzkopf-, haken- und/oder schlingenförmig ausgebildeten Verbindungselementes der Fall.

Die stift-, pilzkopf-, haken- und/oder schlingenförmig ausgebildeten Verbindungselemente des Befestigungselements und/oder des platten- oder profilförmigen Bauelements sind nach ihrer Verbindung nicht mehr sichtbar, da sie von dem platten- oder profilförmigen Bauelement verdeckt werden. Das vorgeschlagene Befestigungselement ermöglicht somit einen großen Gestaltungsspielraum, wenn es beispielsweise um die Befestigung von Fassadenelementen geht. Da nach erfolgter Befestigung die platten- oder profilförmigen Bauelemente auch einfach wieder zu lösen sind, kann ein Austausch einzelner oder sämtlicher Fassadenelemente, beispielsweise zur Neugestaltung der Fassade, vorgenommen werden. Dadurch, dass das vorgeschlagene Befestigungselement ein zerstörungsfreies Abnehmen der Fassadenelemente ermöglicht, können diese erneut verwendet oder einem Wertstoff-Recycling zugeführt werden.

Das erfindungsgemäße Befestigungselement erleichtert ferner die Montage eines platten- oder profilförmigen Bauelements an einem bauseitigen Untergrund, da es zum Ausrichten nochmals abgenommen werden kann. Zugleich ist jedoch eine sichere Befestigung des platten- oder profilförmigen Bauelements am Befestigungselement und somit am bauseitigen Untergrund aufgrund des Kraft- und/oder Formschlusses der Verbindungselemente gewährleistet. Dies gilt insbesondere, wenn das erfindungsgemäße Befestigungselement über ein weiteres Verbindungsmittel, wie beispielsweise einer Schraube im bauseitigen Untergrund fest verankert ist. Die Verankerung bewirkt, dass vor allem Zugkräfte sicher in den bauseitigen Untergrund abgeleitet werden.

Gemäß einer bevorzugten Ausführungsform der Erfindung ist das Befestigungselement mehrteilig, insbesondere zweiteilig, ausgeführt. Ferner sind der tellerartige erste Befestigungsabschnitt an einem ersten Teil und der schaftartige zweite Befestigungsabschnitt an einem zweiten Teil des Befestigungselementes ausgeführt. Die mehrteilige Ausführung des Befestigungselementes ermöglicht den Einsatz unterschiedlicher Werkstoffe und/oder unterschiedlicher Fertigungsverfahren der einzelnen Teile, so dass Werkstoff und/oder Fertigungsverfahren in Bezug auf die Funktion des jeweiligen Teils optimal abgestimmt und damit die Fertigungskosten gesenkt werden können. Die mehreren Teile werden dann werkseits oder erst vor Ort an der Baustelle vom jeweiligen Anwender miteinander verbunden. Letzteres hat den Vorteil, dass die einzelnen Teile leichter zu verpacken, zu lagern und/oder zu transportieren sind.

Bevorzugt besitzt das den tellerartigen ersten Befestigungsabschnitt ausbildende erste Teil eine Ausnehmung zur Aufnahme des den schaftartigen zweiten Befestigungsabschnitt ausbildenden zweiten Teils. Die Verbindung dieser beiden Teile kann dann beispielsweise mittels Ineinanderstecken bewirkt werden. Eine solche Verbindung ist besonders einfach und vor allem ohne Werkzeug realisierbar.

Weiterhin bevorzugt besitzt das den schaftartigen zweiten Befestigungsabschnitt ausbildende zweite Teil eine im Wesentlichen radial verlaufende Anlagefläche zur Anlage an dem den tellerförmigen ersten Befestigungsabschnitt ausbildenden ersten Teil. Die im Wesentlichen radial verlaufende Anlagefläche kann beispielsweise an einem ringförmigen Flansch oder einer Kopfplatte ausgebildet sein. Die Anlagefläche verhindert, dass nach Ineinanderstecken der beiden Teile, das den tellerartigen Befestigungsabschnitt ausbildende erste Teil vom den schaftartigen zweiten Befestigungsabschnitt ausbildenden zweiten Teil rutscht, wenn das Befestigungselement zum Einsatz gelangt. Beispielsweise kann das aus wenigstens zwei Teilen zusammengesetzte Befestigungselement nach Art eines Tellerdübels zur Befestigung von Dämmplatten an einem bauseitigen Untergrund eingesetzt werden. Das den schaftartigen zweiten Befestigungsabschnitt ausbildende zweite Teil wird dann zur Verankerung im Untergrund durch die Dämmplatte hindurch geführt bis das den tellerartigen ersten Befestigungsabschnitt ausbildende erste Teil außen an der Dämmplatte anliegt. Die Dämmplatte wird über das den tellerartigen ersten Befestigungsabschnitt ausbildenden ersten Teil an den Untergrund gedrückt, wobei sich das den tellerartigen ersten Befestigungsabschnitt ausbildende erste Teil an der im Wesentlichen radial verlaufenden Anlagefläche des den schaftartigen zweiten Befestigungsabschnitt ausbildenden zweiten Teils abstützt.

Sofern nachfolgend von dem tellerartigen ersten Befestigungsabschnitt und/oder dem schaftartigen zweiten Befestigungsabschnitt die Rede ist, können diese an einem einteiligen oder mehrteiligen Befestigungselement gemäß der Erfindung ausgebildet sein.

Des Weiteren wird vorgeschlagen, dass die stift-, pilzkopf-, haken- und/oder schlingenförmigen Verbindungselemente an den tellerartigen ersten Befestigungsabschnitt angeformt sind. Das Befestigungselement und die hieran angeformten Verbindungselemente bestehen dann weiterhin bevorzugt aus dem gleichen Werkstoff, beispielsweise einem Kunststoff oder Metall. Alternativ kann auch vorgesehen sein, dass die stift-, pilzkopf-, haken- und/oder schlingenförmigen Verbindungselemente mittelbar über ein gemeinsames Trägerelement mit dem tellerartigen ersten Befestigungsabschnitt verbunden sind. Vorzugsweise erfolgt die Verbindung des Trägerelementes mit dem tellerartigen Befestigungsabschnitt des Befestigungselements über eine Klebe-, Schweiß-, Löt- oder Nietverbindung, so dass eine stoffschlüssige Verbindung bewirkt wird. Als Werkstoff für das Trägerelement und/oder das Befestigungselement kann wiederum ein Kunststoff oder Metall dienen. Das Trägerelement kann als Gewebe, Gewirke, Gelege oder Vlies ausgebildet sein, in welches die Verbindungselemente eingewebt, eingelegt oder in sonstiger Weise aufgenommen bzw. eingearbeitet sind. Das Trägerelement selbst kann zudem die Verbindungselemente ausbilden, insbesondere, wenn es sich dabei um haken- oder schlingenförmige Verbindungselemente handelt.

Vorteilhafterweise ist der schaftartige zweite Befestigungsabschnitt des Befestigungselements zur Aufnahme eines Verbindungsmittels, insbesondere einer Schraube, eines Ankerbolzens oder eines schaftartigen Befestigungsabschnitts eines weiteren Befestigungselementes, hülsenförmig ausgebildet. Das Befestigungselement ist demnach als Dübel einsetzbar, wobei das im Dübel aufgenommene Verbindungsmittel vorzugsweise eine Verankerung des Befestigungselements im bauseitigen Untergrund bewirkt. Handelt es sich bei dem Verbindungsmittel um einen schaftartigen Befestigungsabschnitt eines weiteren Befestigungselements, ist die Ausbildung eines Doppeldübels möglich, der beispielsweise als distanzüberbrückendes Kopplungselement einsetzbar ist.

Der schaftartige zweite Befestigungsabschnitt weist weiterhin bevorzugt ein Gewinde und/oder Rastelemente auf, das bzw. die in Eingriff mit einem korrespondierenden Gewinde oder korrespondierenden Rastelementen eines Verbindungsmittels, insbesondere einer Schraube, eines Ankerbolzens oder eines schaftartigen Befestigungsabschnitts eines weiteren Befestigungselementes bringbar ist bzw. sind. Die über ein Gewinde oder Rastmittel bewirkte Verbindung ermöglicht zum Einen eine sichere Verankerung des Befestigungselements im bauseitigen Untergrund, wenn das Verbindungsmittel beispielsweise eine Schraube oder ein Ankerbolzen ist. Zum Anderen kann auch ein zugkraftübertragender Doppeldübel ausgebildet werden, wenn das Verbindungsmittel beispielsweise ein schaftartiger Befestigungsabschnitt eines weiteren Befestigungselements ist. Alternativ oder ergänzend können an einem hülsenförmig ausgebildeten schaftartigen Befestigungsabschnitt auch außenumfangseitig Gewinde- und/oder Rastelemente angeordnet sein. Außenumfangseitig angeordnete Gewinde- und/oder Rastelemente können beispielsweise eine Verankerung des Befestigungselements in einer das Befestigungselement aufnehmenden Dämmplatte bzw. Dämmschicht bewirken.

Erfindungsgemäß ist das Befestigungselement Bestandteil eines Befestigungssystems zur Befestigung eines platten- oder profilförmigen Bauelementes an einem bauseitigen Untergrund. Bei dem platten- oder profilförmigen Bauelement kann es sich beispielsweise um eine Wärmedämmplatte, eine Platte zur Fassadenverkleidung und/oder um eine Unterkonstruktion zur Aufnahme einer solchen Platte handeln. Bei der Unterkonstruktion kann es sich beispielsweise um eine Lattung bzw. Konterlattung handeln, sofern die Fassadenverkleidung hinterlüftet werden soll. Zur Verbindung mit dem Befestigungselement des Befestigungssystems sind am platten- oder profilförmigen Bauelement stift-, pilzkopf-, haken- und/oder schlingenförmige Verbindungselemente vorgesehen.

Das Befestigungssystem umfasst das Verbindungsmittel, beispielsweise eine Schraube oder einen Ankerbolzen, zur Verbindung des Befestigungselements mit dem bauseitigen Untergrund. Das Verbindungsmittel ist weiterhin bevorzugt kraft- und/oder formschlüssig mit dem Befestigungselement verbindbar. Das Befestigungselement kann hierzu ein Gewinde und/oder Rastelemente aufweisen, das bzw. die mit einem Gewinde und/oder Rastelementen des Verbindungsmittels zusammenwirkt bzw. zusammenwirken.

Des Weiteren wird ein Fassadensystem vorgeschlagen, das ein solches Befestigungssystem sowie ein platten- oder profilförmiges Bauelement umfasst. Das platten- oder profilförmige Bauelement weist stift-, pilzkopf-, haken- und/oder schlingenförmige Verbindungselemente zur kraft- und/oder formschlüssigen Verbindung mit korrespondierenden Verbindungselementen eines Befestigungselements des Befestigungssystems auf. Als korrespondierende Verbindungselemente werden sowohl gleichartig als auch gegengleich ausgebildete Verbindungselemente angesehen, soweit sie eine kraft- und/oder formschlüssige Verbindung ermöglichen.

Die stift-, pilzkopf-, haken- oder schlingenförmigen Verbindungselemente des platten- oder profilförmigen Bauelementes werden gemäß einer ersten bevorzugten Ausführungsform des erfindungsgemäßen Fassadensystems durch das Bauelement selbst ausgeformt. Beispielsweise kann das platten- oder profilförmige Bauelement als Gewebe, Gelege, Gewirke oder Vlies ausgebildet sein oder ein solches umfassen. Im Fall, dass das platten- oder profilförmige Bauelement als Gewebe, Gelege, Gewirke oder Vlies ausgebildet ist, handelt es sich vorzugsweise um ein flexibles Platten- bzw. Profilmaterial, das beispielsweise als Rollenware vorgehalten werden kann. Wie eingangs bereits erwähnt, muss es sich bei dem platten- oder profilförmigen Bauelement nicht zwangsläufig um eine biegesteife Platte oder ein biegesteifes Profil handeln.

Gemäß einer weiteren bevorzugten Ausführungsform sind die stift-, pilzkopf-, haken- oder schlingenförmigen Verbindungselemente mittelbar über ein gemeinsames Trägerelement mit dem platten- oder profilförmigen Bauelement verbunden. Die Verbindung erfolgt vorzugsweise über eine Klebe-, Schweiß-, Löt- oder Nietverbindung, so dass eine stoffschlüssige Verbindung bewirkt wird. Bei dem Trägerelement kann es sich wiederum um ein Gewebe, Gelege, Gewirke oder Vlies handeln, in welches die Verbindungselemente eingewebt, eingelegt oder in sonstiger Weise aufgenommen bzw. eingearbeitet sind. Das Trägerelement selbst kann zudem die Verbindungselemente ausbilden, insbesondere, wenn es sich dabei um haken- oder schlingenförmige Verbindungselemente handelt.

Ferner wird ein Fassadensystem mit einem plattenförmigen Bauelement vorgeschlagen, das als Gewebe, Gelege, Gewirke oder Vlies ausgebildet und als Armierung für eine bereits aufgetragene oder noch aufzutragende Beschichtungsmasse einsetzbar ist. Die aufgetragene bzw. noch aufzutragende Beschichtungsmasse kann beispielsweise der Ausbildung einer ein- oder mehrlagigen Putzschicht dienen. Soll eine fugenlose Fassadenoberfläche erreicht werden, wird die Beschichtungsmasse vorzugsweise bauseits nach der Befestigung der plattenförmigen Bauelemente am Untergrund aufgetragen. Alternativ kann vorgesehen sein, dass wenigstens eine erste Lage einer Beschichtungsmasse bereits werkseits auf das als Gewebe, Gelege, Gewirke oder Vlies ausgebildete plattenförmige Bauelement aufgetragen wird und nach der Befestigung der plattenförmigen Bauelemente am Untergrund der Auftrag einer fugenlosen abschließenden Deckschicht erfolgt. In das als Gewebe, Gelege, Gewirke oder Vlies ausgebildete plattenförmige Bauelement sind vorzugsweise stift-, pilzkopf-, haken- und/oder schlingenförmige Verbindungselemente eingewebt, eingelegt oder in sonstiger Weise aufgenommen bzw. eingearbeitet. Das plattenförmige Bauelement kann darüber hinaus selbst die Verbindungselemente ausbilden, insbesondere, wenn es sich dabei um haken- oder schlingenförmige Verbindungselemente handelt. Somit ist das plattenförmige Bauelement in einfacher Weise mit dem Befestigungselement des Fassadensystems verbindbar und über dieses am bauseitigen Untergrund befestigbar. Das als Gewebe, Gelege, Gewirke oder Vlies ausgebildete plattenförmige Bauelement wird vorzugsweise als Rollenmaterial vorgehalten und vor Ort auf Länge zugeschnitten. Bei einem Rückbau eines solchen Fassadensystems lässt sich jeweils in Abhängigkeit von der Formsteifigkeit der aufgetragenen Schicht, diese entweder von dem als Gewebe, Gelege, Gewirke oder Vlies ausgebildeten plattenförmigen Bauelement abschlagen oder abziehen. Letzeres setzt voraus, dass die Beschichtungsmasse nach dem Durchtrocknen eine zumindest geringfügige Elastizität behält. Somit können auch die Bestandteile eines derartigen Fassadensystems einem Wertstoff-Recycling zugeführt werden.

Gemäß einer alternativen Ausführungsform eines erfindungsgemäßen Fassadensystems ist zwischen einem Befestigungselement und einem platten- oder profilförmigen Bauelement ein Trägerelement mit stift-, pilzkopf-, haken- und/oder schlingenförmigen Verbindungselementen zur kraft- und/oder formschlüssigen Verbindung mit den stift-, pilzkopf-, haken- und/oder schlingenförmigen Verbindungselementen des Befestigungselementes und des platten- oder profilförmigen Bauelementes eingelegt. Das Trägerelement ist hierzu beidseitig mit stift-, pilzkopf-, haken- und/oder schlingenförmigen Verbindungselementen ausgestattet, die mit jeweils korrespondierend ausgebildeten Verbindungselementen am Befestigungselement und am platten- oder profilförmigen Bauelement zusammenwirken. Das Trägerelement kann somit nicht nur der Befestigung des platten- oder profilförmigen Bauelements am bauseitigen Untergrund, sondern auch als Armierungsgewebe dienen.

Zugleich kann das eingelegte separate Trägerelement dem Lösen des befestigten platten- oder profilförmigen Bauelements dienen. Hierzu wird das zwischen dem Befestigungselement und dem platten- oder profilförmigen Bauelement eingelegte Trägerelement seitlich gefasst und herausgezogen. Um zu verhindern, dass dann die stift-, pilzkopf-, haken- und/oder schlingenförmigen Verbindungselemente des Befestigungselements und des platten- oder profilförmigen Bauelements eine kraft- und/oder formschlüssige Verbindung eingehen, sind diese bevorzugt gleichartig, weiterhin bevorzugt jeweils schlingenförmig gewählt.

Zum Lösen der kraft- und/oder formschlüssigen Verbindung eines Befestigungselements mit einem platten- oder profilförmigen Bauelement kann auch ein Werkzeug eingesetzt werden. Hierfür eignet sich insbesondere ein keilförmig ausgebildetes Werkzeug, das zwischen das Befestigungselement und das platten- oder profilförmige Bauelement eingetrieben wird. Ist ein seitlicher Zugang nicht gegeben, kann auch ein Werkzeug von außen auf das platten- oder profilförmige Bauelement aufgesetzt werden. Vorzugsweise ist das platten- oder profilförmige Bauelement über das außen aufgesetzte Werkzeug mit einer Zugkraft beaufschlagbar, die ausreichend ist, die kraft- und/oder formschlüssige Verbindung der Verbindungselemente zu lösen. Die Zugkraft kann beispielsweise mittels Ansaugen bzw. mittels Erzielung eines Unterdrucks zwischen einem aufgesetzten Saugnapf und dem platten- oder profilförmigen Bauelement bewirkt werden. Das Werkzeug ist hierbei weiterhin vorzugsweise an den seitlich angrenzenden platten- oder profilförmigen Bauelementen abgestützt.

Gemäß einer weiteren bevorzugten Ausführungsform eines erfindungsgemäßen Fassadensystems ist das platten- oder profilförmige Bauelement ein Trägerprofil, insbesondere ein Agraffenprofil, zur Befestigung eines platten- oder profilförmigen Fassadenelementes. Das Trägerprofil ist über die stift-, pilzkopf-, haken- und/oder schlingenförmigen Verbindungselemente mit dem Befestigungselement verbindbar, wobei die stift-, pilzkopf- haken- und/oder schlingenförmigen Verbindungselemente eine sichere Verbindung ermöglichen, die jedoch bei Bedarf, beispielsweise zum Ausrichten des Trägerprofils, wieder lösbar ist. Auf diese Weise kann die Anbringung eines Trägerprofils an einem bauseitigen Untergrund deutlich vereinfacht werden. Das Trägerprofil kann dabei in horizontaler oder senkrechter Ausrichtung am bauseitigen Untergrund befestigt werden. Darüber hinaus ist auch eine Befestigung in einer beliebigen anderen Ausrichtung möglich. Hierzu ist das Trägerprofil an seiner Rückseite zumindest im Bereich eines ggf. bereits im bauseitigen Untergrund verankerten Befestigungselementes mit stift-, pilzkopf-, haken- und/oder schlingenförmigen Verbindungselementen versehen.

Der Einsatz eines Agraffenprofils ermöglicht die Ausbildung eines Fassadensystems, das vorgehängte platten- oder profilförmige Fassadenelemente aufweist. Ferner kann in einfacher Weise eine Hinterlüftung der vorgehängten Fassadenelemente erreicht werden.

Bei den Fassadenelementen kann es sich um ein- oder mehrschichtige Fassadenpaneele, beispielsweise um Schichtwerkstoffplatten aus Holz, Metall und/oder Kunststoff, oder sonstige Plattenmaterialien handeln. Darüber hinaus sind rahmenartige Fassadenelemente, beispielsweise zur Ausbildung oder Aufnahme von Tür- oder Fensterelementen, in einem solchen Fassadensystem einsetzbar.

Ferner wird ein Verfahren zur Herstellung eines erfindungsgemäßen Fassadensystems vorgeschlagen, das die folgenden Verfahrensschritte umfasst:
- Befestigen wenigstens einer Dämmplatte an einem bauseitigen Untergrund
   i) mittels eines Befestigungselementes, das einen tellerartigen ersten Befestigungsabschnitt und einen hieran angesetzten schaftartigen zweiten Befestigungsabschnitt zur Aufnahme eines Verbindungsmittels umfasst, wobei der schaftartige zweite Befestigungsabschnitt durch die Dämmplatte hindurch geführt wird bis der tellerartige erste Befestigungsabschnitt an der Dämmplatte anliegt,
   ii) mittels des Verbindungsmittels, beispielsweise in Form einer Schraube oder eines Ankerbolzens, das in den schaftartigen zweiten Befestigungsabschnitt des Befestigungselements eingesetzt und unmittelbar oder mittelbar im bauseitigen Untergrund verankert wird,
- Verbinden stift-, pilzkopf-, haken- und/oder schlingenförmigen Verbindungselemente, die der tellerartige erste Befestigungsabschnitt des Befestigungselements auf der dem schaftartigen zweiten Befestigungsabschnitt abgewandten Seite aufweist, mit korrespondierenden Verbindungselementen an einem platten- oder profilförmigen Bauelement durch Inkontaktbringen und Andrücken des platten- oder profilförmigen Bauelements an das Befestigungselement, wobei die Verbindungselemente des platten- oder profilförmigen Bauelementes zumindest teilweise in Überdeckung mit den Verbindungselementen des Befestigungselements gebracht werden.

Das vorgeschlagene Verfahren eignet sich insbesondere zur Herstellung eines Wärmedämmverbundsystems, wobei es Wärmedämmplatten an einem bauseitigen Untergrund zu befestigen gilt. Bei einem herkömmlichen Verfahren zur Herstellung eines Wärmedämmverbundsystems werden die Dämmplatten in der Regel zunächst mittels eines Klebers am bauseitigen Untergrund angebracht und danach mittels eine mechanischen Befestigungsmittels zusätzlich fixiert. Die Aufgabe des mechanischen Befestigungsmittels besteht darin, ein Abscheren und/oder Abdrücken der Dämmplatten vom bauseitigen Untergrund, insbesondere während der Trocknungsphase des Klebers, zu verhindern. Bei dem erfindungsgemäßen Verfahren ist der Verfahrensschritt der Anbringung der Dämmplatten am bauseitigen Untergrund mittels eines Klebers entbehrlich, da das erfindungsgemäße Befestigungsmittel bereits eine sichere Befestigung der Dämmplatten ermöglicht. Der Verzicht auf eine Kleberschicht weist den Vorteil auf, dass die Dämmplatte bei Bedarf zerstörungsfrei vom bauseitigen Untergrund wieder lösbar und erneut einsetzbar oder einem Wertstoff-Recycling zuführbar ist.

Das erfindungsgemäße Verfahren zur Herstellung eines Fassadensystems, insbesondere eines Wärmedämmverbundsystems, kann optional aber auch den Verfahrensschritt der Anbringung einer Dämmplatte an einem bauseitigen Untergrund mittels eines Klebers umfassen, welcher dann dem Verfahrensschritt der Befestigung der Dämmplatte mittels eines erfindungsgemäßen Befestigungselementes vorangeht.

Zur Ausbildung eines Wärmedämmverbundsystems findet des Weiteren bevorzugt eine Trägerplatte, insbesondere eine Putzträgerplatte, als platten- oder profilförmiges Bauelement Einsatz, das es mittels eines erfindungsgemäßen Befestigungselementes am bauseitigen Untergrund zu befestigen gilt. Die Befestigung erfolgt über die jeweils am Befestigungselement und am platten- oder profilförmigen Bauelement ausgebildeten stift-, pilzkopf-, haken- und/oder schlingenförmigen Verbindungselemente. In einem weiteren optionalen Verfahrensschritt wird auf eine derart am bauseitigen Untergrund befestigte Trägerplatte eine ein- oder mehrlagige Putzschicht als Deckschicht aufgebracht. Ergänzend kann auf die ein- oder mehrlagige Putzschicht noch eine ein- oder mehrlagige Farbschicht aufgetragen werden.

Darüber hinaus ermöglicht das erfindungsgemäße Verfahren die Anbringung sonstiger platten- oder profilförmiger Bauelemente, wie beispielsweise industriell gefertigter Fassadenelemente, welche aus einem oder mehreren Werkstoffen bestehen. Die Fassadenelemente können beispielsweise als Paneele zur Verfügung stehen, welche zur Verbindung mit dem erfindungsgemäßen Befestigungselement auf ihrer Rückseite mit stift-, pilzkopf-, haken- und/oder schlingenförmigen Verbindungselementen versehen sind. Die Verbindung mit dem Befestigungselement kann auch mittelbar über ein platten- oder profilförmiges Trägerelement erfolgen. Beispielsweise kann zur Ausbildung einer Unterkonstruktion zunächst ein platten- oder profilförmiges Bau- bzw. Trägerelement mittels der stift-, pilzkopf-, haken- und/oder schlingenförmigen Verbindungselemente mit dem Befestigungselement verbunden und danach das Fassadenelement an der Unterkonstruktion angebracht werden. Bevorzugt finden profilförmige Trägerelemente zur Ausbildung einer Unterkonstruktion Einsatz. Die profilförmigen Trägerelemente bzw. Trägerprofile können mit weiteren am Fassadenelement vorgesehenen Trägerprofilen derart zusammenwirken, dass das Fassadenelement nur noch in die Unterkonstruktion eingehängt werden muss. Derartige Trägerprofile sind aus dem Stand der Technik grundsätzlich bekannt. Beispielhaft wird in diesem Zusammenhang auf die bereits vorstehend erwähnten Agraffenprofile verwiesen. Das Agraffenprofil umfasst ein unmittelbar oder mittelbar am bauseitigen Untergrund zu befestigendes erstes sowie ein am Fassadenelement zu befestigendes zweites Profilteil, wobei erstes und zweites Profilteil ineinandergreifend verbindbar sind. Darüber hinaus können zur Ausbildung einer Unterkonstruktion beliebig andere platten- oder profilförmige Bau- bzw. Trägerelemente Verwendung finden.

Bei der Herstellung eines Fassadensystems kann erfindungsgemäß auch ein mehrteiliges Befestigungselement zum Einsatz gelangen. In diesem Fall umfasst das Verfahren zur Herstellung des Fassadensystems die folgenden Verfahrensschritte:
- Befestigen wenigstens einer Dämmplatte an einem bauseitigen Untergrund
   ii) mittels eines mehrteiligen, insbesondere zweiteiligen, Befestigungselementes, das einen tellerartigen ersten Befestigungsabschnitt sowie einen hieran angesetzten schaftartigen zweiten Befestigungsabschnitt zur Aufnahme eines Verbindungsmittels umfasst, wobei der tellerartige erste Befestigungsabschnitt an einem ersten Teil und der schaftartige zweite Befestigungsabschnitt an einem zweiten Teil ausgebildet sind, und wobei die Teile des Befestigungselementes zunächst verbunden werden, sofern diese nicht bereits verbunden sind, danach das
      den schaftartigen zweiten Befestigungsabschnitt ausbildende zweite Teil durch die Dämmplatte hindurch geführt wird bis das den tellerartigen ersten Befestigungsabschnitt ausbildende Teil an der Dämmplatte anliegt,
   ii) mittels eines Verbindungsmittels, beispielsweise in Form einer Schraube oder eines Ankerbolzens, das in das den schaftartigen zweiten Befestigungsabschnitt ausbildende zweite Teil eingesetzt und unmittelbar oder mittelbar im bauseitigen Untergrund verankert wird,
- Verbinden stift-, pilzkopf-, haken- und/oder schlingenförmigen Verbindungselemente, die der tellerartige erste Befestigungsabschnitt des ersten Teils des Befestigungselements aufweist, mit korrespondierenden stift-, pilzkopf-, haken- und/oder schlingenförmigen Verbindungselementen an einem platten- oder profilförmigen Bauelement durch Inkontaktbringen und Andrücken des platten- oder profilförmigen Bauelements an das Befestigungselement, wobei die Verbindungselemente des platten- oder profilförmigen Bauelements zumindest teilweise in Überdeckung mit den Verbindungselementen des Befestigungselementes gebracht werden.

Wie eine Gegenüberstellung der Verfahren zeigt, bedarf es bei Einsatz eines mehrteiligen Befestigungselementes - wenn überhaupt - lediglich eines weiteren Verfahrensschrittes. Dieser besteht darin, die mehreren Teile des Befestigungselementes vor Ort zu verbinden, sofern diese nicht bereits werkseits verbunden worden sind. Da sich die Teile vorzugsweise durch einfaches Ineinanderstecken miteinander verbinden lassen, ist der zusätzliche Aufwand gering.

Im Hinblick auf die übrigen Verfahrensschritte entspricht das Verfahren weitgehend dem zuvor beschriebenen Verfahren. Insbesondere können die im Zusammenhang mit dem zuvor beschriebenen Verfahren angegebenen optionalen Verfahrensschritte (Ausbildung einer Kleberschicht zur Befestigung der Dämmplatten, Aufbringen einer ein- oder mehrlagigen Putz- und/oder Farbschicht, Anbringung platten- oder profilförmiger Fassadenelemente usw.) hier ebenfalls zur Ausführung gelangen.

Bevorzugte Ausführungsbeispiele der Erfindung werden nachfolgend anhand der Zeichnungen näher beschrieben. Diese zeigen:
- Fig.1: einen Schnitt durch eine erste Ausführungsform eines erfindungsgemäßen Fassadensystems,
- Fig.2: einen Schnitt durch eine zweite Ausführungsform eines erfindungsgemäßen Fassadensystems,
- Fig.3: einen Schnitt durch eine dritte Ausführungsform eines erfindungsgemäßen Fassadensystems,
- Fig. 4: einen Schnitt durch eine erste Ausführungsform eines erfindungsgemäßen Befestigungssystems,
- Fig. 5: einen Schnitt durch eine zweite Ausführungsform eines erfindungsgemäßen Befestigungssystems,
- Fig. 6: einen Schnitt durch eine dritte Ausführungsform eines erfindungsgemäßen Befestigungssystems,
- Fig. 7: einen Schnitt durch eine vierte Ausführungsform eines erfindungsgemäßen Befestigungssystems,
- Fig. 8: einen Schnitt durch eine fünfte Ausführungsform eines erfindungsgemäßen Befestigungssystems und
- Fig. 9: einen Schnitt durch das Befestigungssystem des Fassadensystems der Fig. 1 mit einem Werkzeug zum Lösen der Befestigung.
- Fig. 10: einen Schnitt durch eine vierte Ausführungsform eines erfindungsgemäßen Fassadensystems, wobei das Befestigungselement mehrteilig ausgeführt ist,

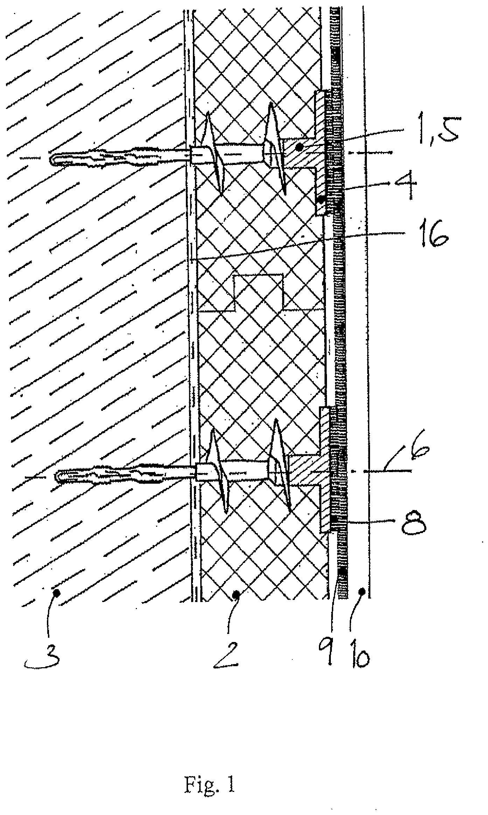

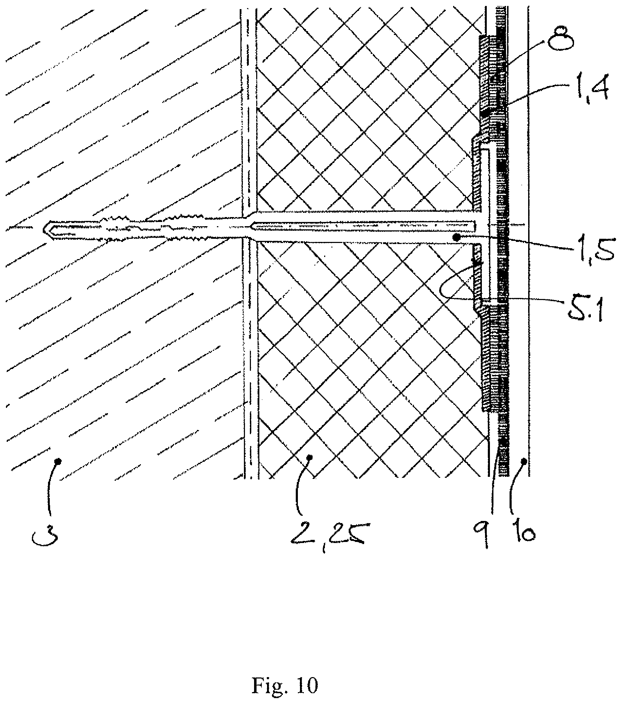

- Fig. 1: 1 eine Draufsicht auf das den tellerartigen ersten Befestigungsabschnitt ausbildende Teil des Befestigungselementes der Fig. 10,

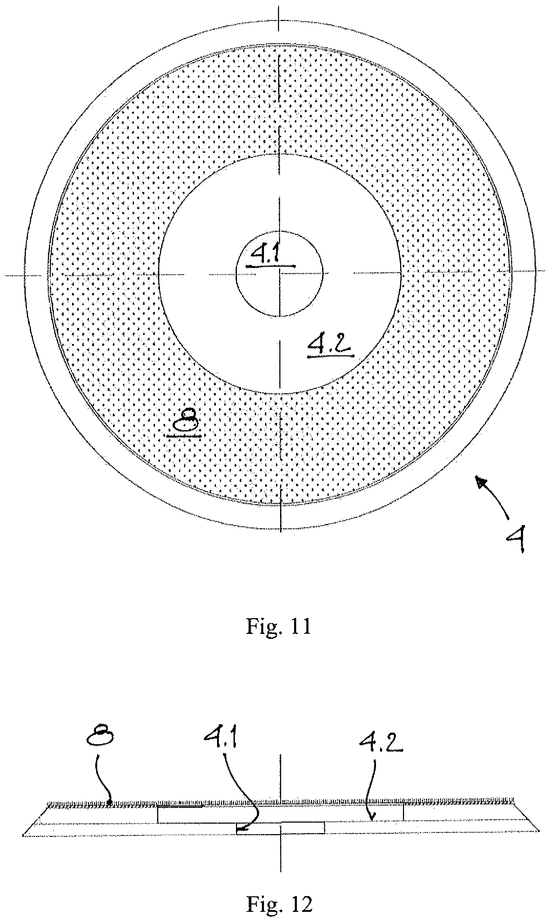

- Fig. 12: einen Schnitt durch das den tellerartigen ersten Befestigungsabschnitt ausbildende Teil gemäß Fig. 11,

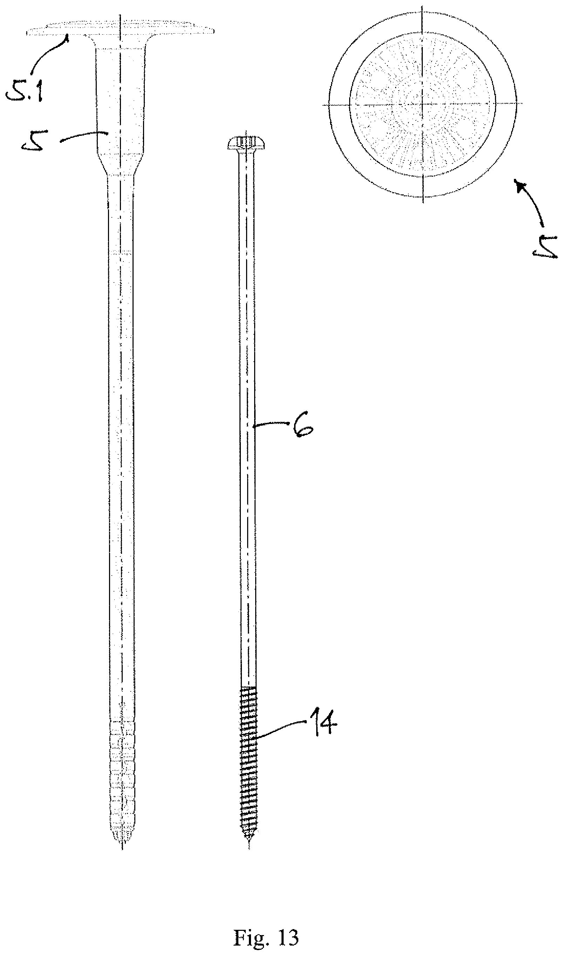

- Fig. 13: Ansichten des den schaftartigen zweiten Befestigungsabschnitt ausbildenden Teils des Befestigungselementes der Fig. 10 und eines Verbindungsmittels in Form einer Schraube,

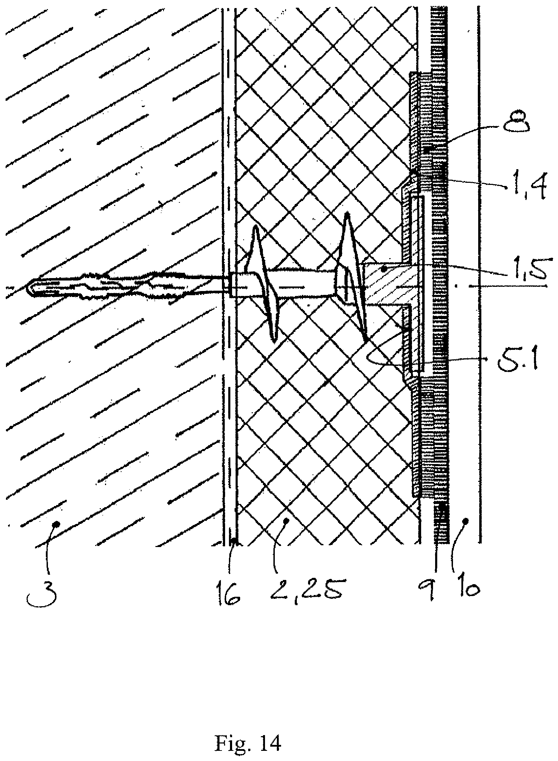

- Fig. 14: einen Schnitt durch eine fünfte Ausführungsform eines erfindungsgemäßen Fassadensystems, wobei das Befestigungselement mehrteilig ausgeführt ist,

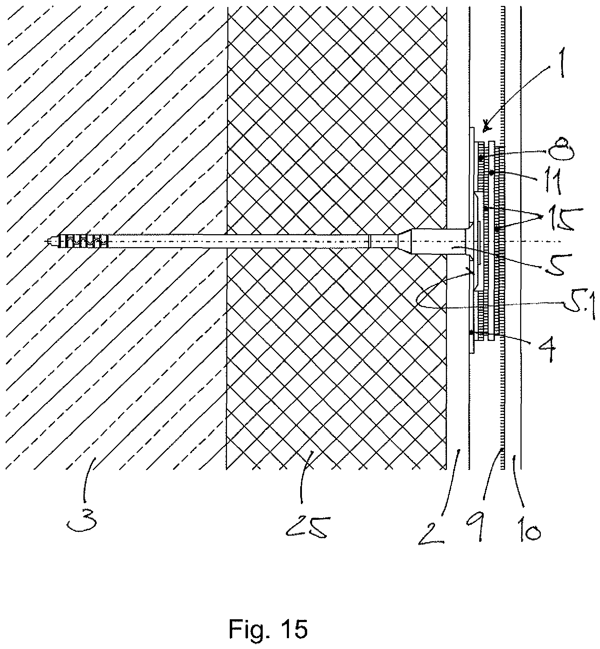

- Fig. 15: einen Schnitt durch eine sechste Ausführungsform eines erfindungsgemäßen Fassadensystems und

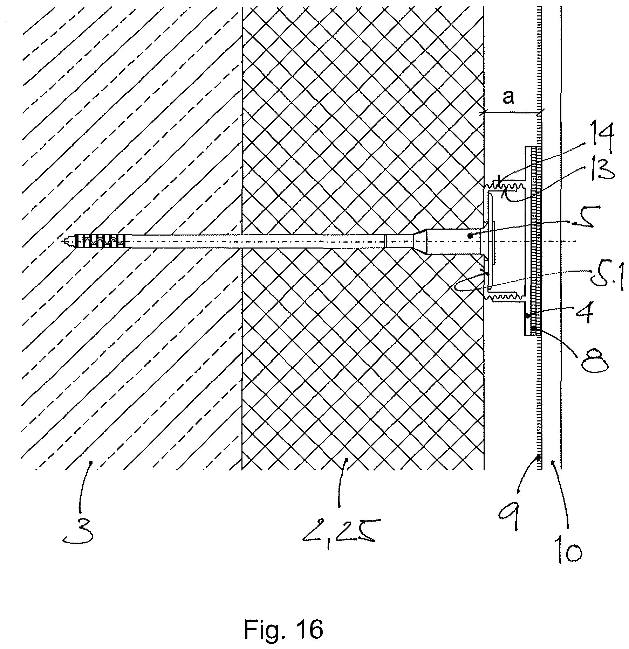

- Fig. 16: einen Schnitt durch eine siebte Ausführungsform eines erfindungsgemäßen Fassadensystems.

### Ausführliche Beschreibung der Zeichnungen

Das in der Fig. 1 dargestellte erfindungsgemäße Fassadensystem umfasst eine Wärmedämmplatte 2 sowie ein weiteres platten- oder profilförmiges Bauelement 10, welche es an einem ein bauseitigen Untergrund 3 zu befestigen gilt. Bei dem bauseitigen Untergrund 3 handelt es sich vorliegend um eine massive Gebäudeaußenwand aus Stahlbeton. Alternative Untergründe können Mauerwerkswände oder in Skelettbauweise errichtete Wände sein. Darüber hinaus schließt der Begriff "Fassade" auch Bauteile mit einer horizontal verlaufenden Oberfläche, beispielsweise Decken oder Vorsprünge mit ein, die es in entsprechender Weise zu verkleiden gilt.

Während die Wärmedämmplatte 2 im Wesentlichen der Erfüllung der energetischen Auflagen an die Gebäudeaußenwand dient, besteht die Aufgabe des platten- oder profilförmigen Bauelementes 10 vorrangig darin, das Bauteil vor der Witterung zu schützen und/oder dem Bauteil ein optisch ansprechendes Äußeres zu verleihen. Beispielsweise kann es sich bei dem platten- oder profilförmigen Bauelement um eine Fassadenplatte aus einem witterungsbeständigen Schichtwerkstoff handeln, die ohne Hinterlüftung direkt auf die Dämmschichtebene oder auf eine Lattung ggf. einschließlich Konterlattung aufgebracht wird. Zur Befestigung derartiger platten- oder profilförmiger Bauelemente 10 werden oftmals Baukleber ggf. unter Zuhilfenahme zusätzlicher mechanischer Verbindungsmittel eingesetzt. Diese weisen jedoch den Nachteil auf, dass ein Lösen der platten- oder profilförmigen Bauelemente vom Untergrund, beispielsweise zum Ausrichten oder Ausbessern einer defekten Stelle, nachträglich nicht mehr möglich ist. Sofern sich die platten- oder profilförmigen Bauelemente doch lösen lassen, erfolgt dies in der Regel nicht zerstörungsfrei. Die abgelösten Bauelemente sind daher im Allgemeinen nicht wiederverwendbar.

Um die vorstehend genannten Probleme zu beseitigen, weist das in der Fig. 1 dargestellte erfindungsgemäße Fassadensystem ein Befestigungssystem mit wenigstens einem Befestigungselement 1 auf, das einen tellerartigen Befestigungsabschnitt 4 und einen hieran angesetzten schaftartigen Befestigungsabschnitt 5 zur Aufnahme einer Schraube als Verbindungsmittel 6 umfasst. Die Schraube dient der Verankerung des Befestigungselements 1 im bauseitigen Untergrund 3. Dabei wird das Befestigungselement 1 derart in die Wärmedämmplatte 2 eingesetzt, dass der tellerartige Befestigungsabschnitt an der Wärmedämmplatte 2 anliegt und diese entsprechend einem herkömmlichen Tellerdübel an den bauseitigen Untergrund 3 drückt. Somit wird eine mehrere Wärmedämmplatten 2 umfassende Wärmedämmschicht sicher in Anlage am bauseitigen Untergrund 3 gehalten. Darüber hinaus weist das Befestigungselement 1 auf der dem schaftartigen Befestigungsabschnitt 5 abgewandten Seite des tellerartigen Befestigungsabschnitts 4 stift-, pilzkopf-, haken- und/oder schlingenförmige Verbindungselemente 8 auf, die eine kraft- und/oder formschlüssige Verbindung mit korrespondierend hierzu ausgebildeten Verbindungselementen 9 an einem platten- oder profilförmigen Bauelement 10 ermöglichen. Die Gestaltung der Verbindungselemente 8, 9 ist derart gewählt, dass eine Art Klettverbindung hergestellt wird, die zerstörungsfrei lösbar ist, zugleich jedoch eine sichere Befestigung des platten- oder profilförmigen Bauelements 10 am bauseitigen Untergrund 3 ermöglicht.

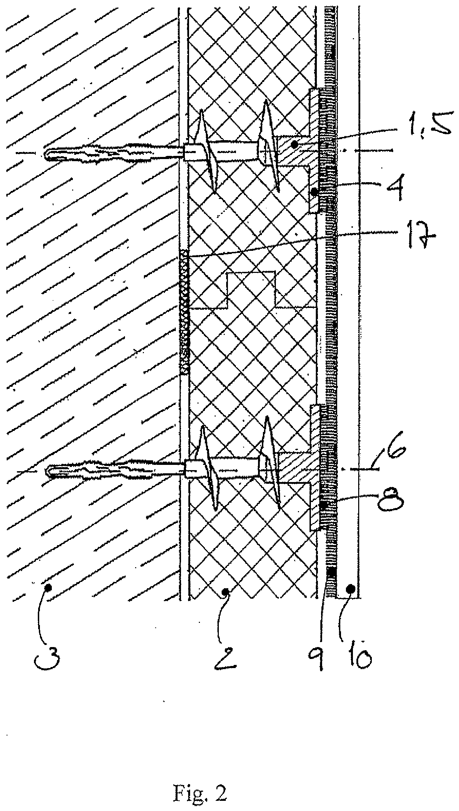

Um eine aus bauphysikalischer Sicht unerwünschte Konvektion zu verhindern, ist bei dem Fassadensystem der Fig. 1 zwischen der Wärmedämmpatte 2 und dem bauseitigen Untergrund 3 ein großvolumiges Vlies 16 angeordnet. Alternativ hierzu können anstelle des Vlieses 16 auch mehrere Kompribänder 17 zwischen der Wärmedämmebene und dem bauseitigen Untergrund 3 angeordnet werden (siehe Fig. 2).

In Abhängigkeit von den jeweiligen energetischen Anforderungen kann die Wärmdämmebene auch mehrschichtig ausgebildet werden. Zur Befestigung einer ersten Wärmedämmschicht kann wiederum das bereits aus den Fig. 1 und 2 bekannte Befestigungselement 1 mit einem tellerartigen Befestigungsabschnitt 4 und einem hieran angesetzten schaftartigen Befestigungsabschnitt 5 einschließlich dem Verbindungsmittel 6 zur Verankerung des Befestigungselements 1 im bauseitigen Untergrund 3 eingesetzt werden. An die stift-, pilzkopf-, haken- und/oder schlingenförmigen Verbindungselemente 8 können dann über korrespondierend ausgebildete Verbindungselemente 9 weitere Wärmedämmplatten zur Ausbildung einer zweiten Wärmedämmschicht angeklettet werden. Um darüber hinaus die Befestigung eines weiteren platten- oder profilförmigen Bauelementes 10 am bauseitigen Untergrund zu ermöglichen, sind die Wärmedämmplatten 2 der zweiten Wärmedämmschicht beidseits mit stift-, pilzkopf-, haken- und/oder schlingenförmigen Verbindungselementen 9, 8 versehen, die mit korrespondierend ausgebildeten Verbindungselementen 9 am platten- oder profilförmigen Bauelement 10 zusammenwirken.

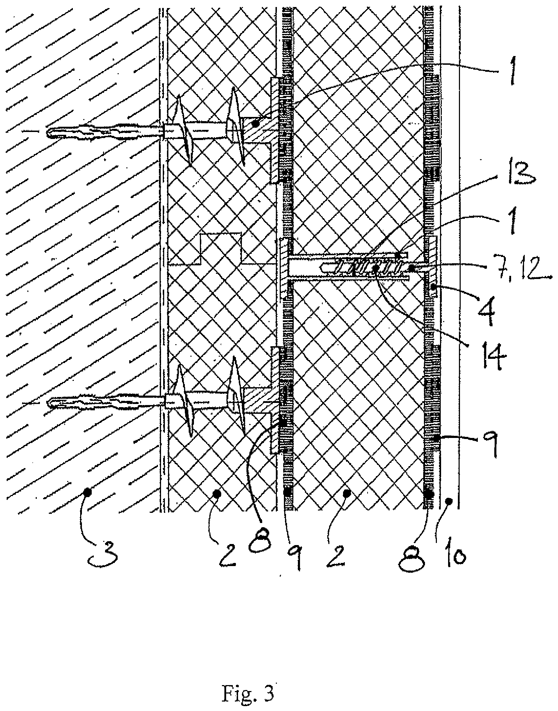

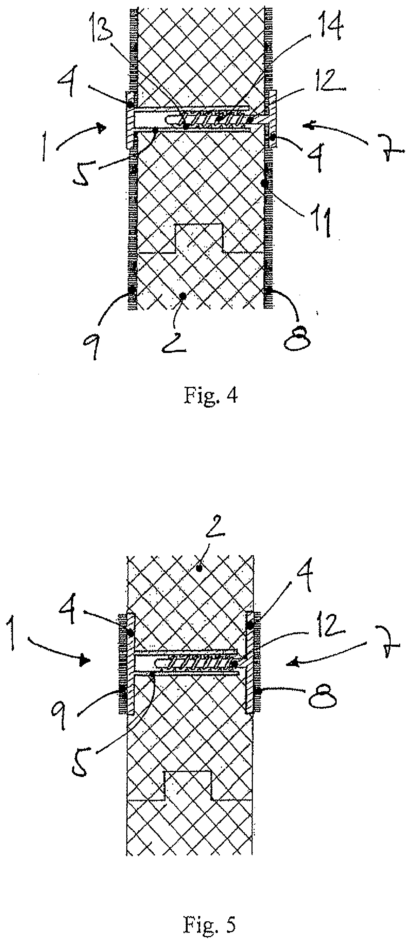

Bei dem in der Fig. 3 dargestellten Fassadensystem sind die stift-, pilzkopf-, haken- und/oder schlingenförmigen Verbindungselemente 9, 8 jeweils auf einem gemeinsamen Trägerelement 11 (nicht dargestellt) angeordnet, welche über als Doppel dübel ausgebildete Befestigungselemente 1, 7 in Anlage mit den Wärmdämmplatten 2 der zweiten Wärmedämmschicht gehalten werden. Die Doppeldübel erlauben lediglich eine punktuelle Befestigung der beidseitig angeordneten Trägerelemente 11, welche jedoch ausreicht, um die Wärmedämmplatten 2 der zweiten Wärmedämmschicht sicher am bauseitigen Untergrund 3 bzw. an den hierin verankerten Befestigungselementen 1 zu halten. Wie das Befestigungselement 1 weisen auch die als Doppeldübel ausgebildeten Befestigungselemente 1, 7 jeweils einen tellerartigen Befestigungsabschnitt 4 sowie einen schaftartigen Befestigungsabschnitt 5, 12 auf, wobei wenigstens ein schaftartiger Befestigungsabschnitt 5 hülsenförmig zur Aufnahme des schaftartigen Befestigungsabschnitts 12 des jeweils anderen Dübels ausgebildet ist. Zur Justierung des Abstands zwischen den beiden tellerartigen Befestigungsabschnitten 4 der Befestigungselemente 1, 7 und/oder zur Übertragung einer Zugkraft ist der eine schaftartige Befestigungsabschnitt 5 mit einem Innengewinde 13 und der andere schaftartige Befestigungsabschnitt 12 mit einem Außengewinde 14 versehen (siehe auch Fig. 4). Die Gewindeverbindung ermöglicht zudem ein Lösen des mehrschichtigen Aufbaus bestehend aus Trägerelementen 11 und der Wärmedämmplatte 2, so dass jedes Element für sich einer Verwertung zuzuführen ist.

Eine weitere bevorzugte Ausführungsform eines Doppeldübels ist der Fig. 5 zu entnehmen. Hier sind die stift-, pilzkopf-, haken- und/oder schlingenförmigen Verbindungselemente 9, 8 jeweils auf dem tellerartigen Befestigungsabschnitt 4 der Befestigungselemente 1, 7 in der Weise angeordnet, dass sie mit korrespondierenden Verbindungselementen 8, 9 eines weiteren Befestigungselements 1 und/oder eines platten- oder profilförmigen Bauelements 10 verbindbar sind. Die beiden Befestigungselemente 1, 7 des Doppeldübels der Fig. 5 sind wiederum über eine Gewindeverbindung lösbar verbunden.

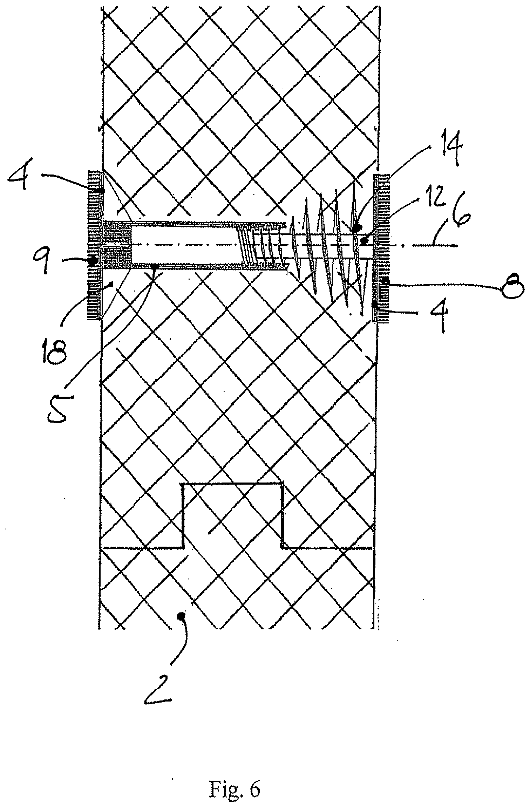

Eine Weiterbildung des Doppeldübels der Fig. 5 ist in der Fig. 6 dargestellt. Hier weist der schaftartige Befestigungsabschnitt 5 wenigstens einen schwertartig ausgebildeten Ansatz 18 als Verdrehsicherung auf. Ferner ist das Gewinde 14 des schaftartigen Befestigungsabschnitts 12 derart ausgeführt, dass zumindest ein Teilbereich des Gewindes 14 einen Formschluss des Befestigungselements 7 mit der Wärmedämmplatte 2 bewirkt. Darüber hinaus ist auch der schaftartige Befestigungsabschnitt 12 des Befestigungselements 7 hülsenförmig ausgebildet, um bei Bedarf eine Schraube als zusätzliches Verbindungsmittel 6 aufnehmen zu können. Durch das aufgenommene Verbindungsmittel 6 kann ein Aufspreizen wenigstens eines schaftartigen Befestigungsabschnitts 5, 12 und damit ebenfalls ein Formschluss des bzw. der Befestigungselemente 1, 7 im Wärmedämmelement 2 bewirkt werden.

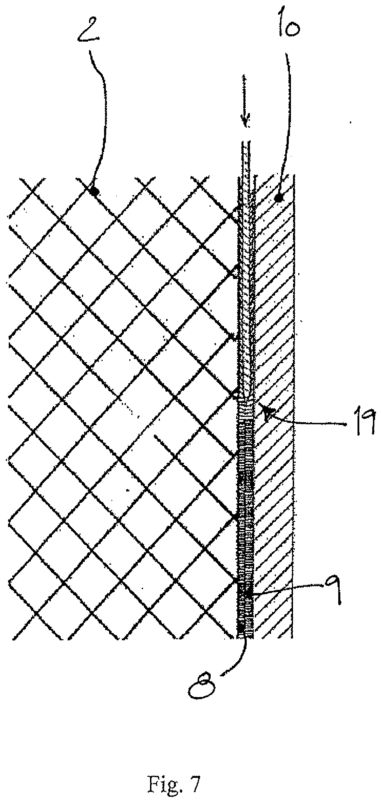

Um ein sichere Befestigung eines platten- oder profilförmigen Bauelements 2, 10 an einem bauseitigen Untergrund 3 zu erzielen, sind die jeweiligen stift-, pilzkopf-, haken- und/oder schlingenförmigen Verbindungselemente 8, 9 bevorzugt derart ausgebildet, dass ein Lösen der Verbindung den Einsatz eines Werkzeuges bedarf. Ein solches Werkzeug ist beispielhaft in der Fig. 7 dargestellt. Es weist zumindest eine keilförmig ausgebildete Spitze bzw. Kante 19 auf, mit welcher das Werkzeug zwischen das platten- oder profilförmige Bauelement 2, 10 und den Untergrund 3 bzw. die Wärmedämmplatte 2 getrieben werden kann. Die Kante 19 bewirkt ein Verbiegen der stift-, pilzkopf-, haken- und/oder schlingenförmigen Verbindungselemente 8, 9 und damit ein Lösen des Kraft- und/oder Formschlusses der ineinandergreifenden Verbindungselemente 8, 9.

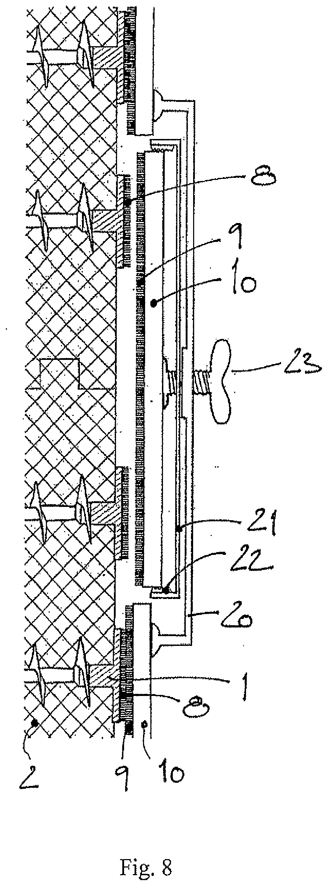

Da das Werkzeug der Fig. 7 seitlich angesetzt werden muss, was nicht immer möglich ist, wird ein weiteres außen ansetzbares Abzieh-Werkzeug 24 vorgeschlagen, das der Fig. 8 zu entnehmen ist. Das Abzieh-Werkzeug 24 weist einen Rahmen 20 auf, der an den angrenzenden platten- oder profilförmigen Bauelementen 10 abgestützt ist. Im Rahmen 20 ist ein weiterer Rahmen 21 mit Klauen 22 gelagert, die das abzunehmende platten- oder profilförmige Bauelement 10 umgreifen. Durch Aufbringen einer Zugkraft wird das platten- oder profilförmige Bauelement 10 dann abgezogen. Die Zugkraft kann beispielsweise über ein Gewinde 23 oder eine Saugvorrichtung auf das abzunehmende platten- oder profilförmige Bauelement 10 aufgebracht werden. Wahlweise kann das Abzieh-Werkzeug 24 auch ohne Klauen 22 ausgebildet werden.

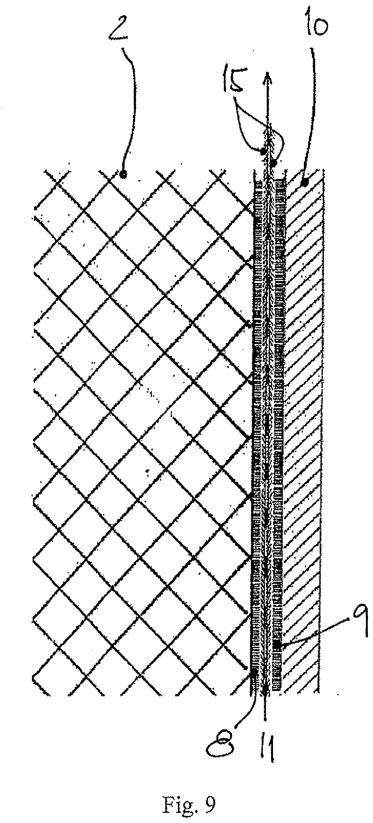

Der Einsatz eines Werkzeugs ist entbehrlich, wenn zwischen den stift-, pilzkopf-, haken- und/oder schlingenförmigen Verbindungselemente 8, 9 am platten- oder profilförmigen Bauelement 2, 10 und am bauseitigen Untergrund 3 bzw. an der Wärmedämmplatte 2 ein Trägerelement 11 mit jeweils korrespondierenden Verbindungselementen 15 eingelegt ist (siehe Fig. 9). Die korrespondierenden Verbindungselemente 15 sind dabei auf beiden Seiten des Trägerelements 11 angeordnet, so dass eine kraft- und/oder formschlüssige Verbindung des Trägerelements 11 sowohl mit dem platten- oder profilförmigen Bauelement 2, 10 als auch mit dem bauseitigen Untergrund 3 bzw. der Wärmedämmplatte 2 bewirkt wird. Das eingelegte Trägerelement 11 ermöglicht zugleich ein einfaches Lösen der kraft- und/oder formschlüssigen Verbindung, indem das Trägerelement 11 seitlich gefasst und in Pfeilrichtung (siehe Fig. 9) herausgezogen wird.

Fig. 10 zeigt eine weitere bevorzugte Ausführungsform eines erfindungsgemäßen Fassadensystems. Es unterscheidet sich von den Vorangegangen dadurch, dass das hierin eingesetzte Befestigungselement 1 zweiteilig ausgeführt ist. Es umfasst ein erstes Teil, welches den tellerartigen ersten Befestigungsabschnitt 4 ausbildet, und ein zweites Teil, das den schaftartigen zweiten Befestigungsabschnitt 5 ausbildet. Das erste Teil ist als Scheibe mit einer zentralen Ausnehmung 4.1 ausgeführt, welche der Aufnahme des zweiten Teils dient. Zur Verbindung beider Teile muss lediglich das zweite Teil in die Ausnehmung 4.1 des ersten Teils eingesetzt werden. Das zweite Teil umfasst an einem Ende einen ringförmigen Flansch (siehe Fig. 13, rechte Seite), an dem eine radial verlaufende Anlagefläche 5.1 zur Anlage am ersten Teil ausgebildet ist (siehe Fig. 13, linke Seite), wenn das zweite Teil in das erste Teil eingesetzt wird. Der Flansch ist an einen Schaft angesetzt, der zur Aufnahme eines Verbindungsmittels 6, hier eine Schraube (siehe Fig. 13, Mitte), hohl ausgebildet ist. Das Gewinde 14 der Schraube wirkt mit einem korrespondierend hierzu ausgebildeten Gewinde (nicht dargestellt) im Inneren des Schaftes des zweiten Teils zusammen. Die Schraube dient der Verankerung des zweiteiligen Befestigungselements 1 im bauseitigen Untergrund 3.

Zur Herstellung des Fassadensystems der Fig. 10 wird zunächst eine Wärmedämmpatte 2, 25 mittels eines Klebers am bauseitigen Untergrund 3 angebracht und danach mittels des zweiteiligen Befestigungselementes 1 befestigt. Hierzu wird zunächst das zweite Teil des Befestigungselementes 1 in die Ausnehmung 4.1 des ersten Teils eingesetzt. Das zweiteilige Element wird dann durch die Wärmedämmplatte 2, 25 bis in den Untergrund 3 geführt und mittels der Schraube im Untergrund 3 verankert. Das den tellerartigen ersten Befestigungsabschnitt 4 ausbildende erste Teil des Befestigungselementes 1 wird dabei über den ringförmigen Flansch des zweiten Teils an die Wärmedämmplatte 2, 25 gedrückt. Das den tellerartigen ersten Befestigungsabschnitt 4 ausbildende erste Teil wirkt demnach wie eine Unterlegscheibe und verhindert ein Durchstoßen des Befestigungselementes 1 durch die Wärmedämmplatte 2, 25. Diese wird demnach sicher am Untergrund 3 gehalten.

Die stift-, pilzkopf-, haken- und/oder schlingenförmigen Verbindungselemente 8 zur Befestigung eines platten- oder profilförmigen Bauelementes 10 sind auf dem ersten Teil - vorliegend mittels einer Klebeverbindung - aufgebracht. Um ein Inkontaktbringen mit den stift-, pilzkopf-, haken- und/oder schlingenförmigen Verbindungselementen 9 des platten- oder profilförmigen Bauelementes 10 zu gewährleisten, ist im ersten Teil eine zweite Ausnehmung 4.2 zur Aufnahme des ringförmigen Flansches des zweiten Teils eingebracht. Die Ausnehmung 4.2 kann beispielsweise durch eine Verformung des scheibenförmigen ersten Teils hergestellt werden. Das setzt voraus, dass das erste Teil zumindest geringfügig verformbar ist. Das erste Teil kann aber auch - wie im Beispiel der Fig. 10 - ein Stanz-/Biegeteil sein, bei welchem die Ausnehmung 4.2 bereits werkseits eingebracht wurde. Die Ausnehmung 4.2 kann darüber hinaus durch ein Prägeverfahren hergestellt werden.

Eine alternative Ausführungsform eines einen tellerartigen Befestigungsabschnitt 4 ausbildenden ersten Teils eines erfindungsgemäßen mehrteiligen Befestigungselementes ist in den Fig. 11 und 12 dargestellt. Hier ist das erste Teil als mehrschichtige Scheibe ausgeführt, wobei in einer ersten unteren Schicht die zentrale Ausnehmung 4.1 und konzentrisch hierzu in einer nachfolgenden zweiten Schicht die Ausnehmung 4.2 ausgebildet ist. Die zweite Schicht trägt zudem die stift-, pilzkopf-, haken- und/oder schlingenförmigen Verbindungselemente 8. Insgesamt weist das erste Teil damit drei Schichten auf, wenn man etwaige Kleberschichten vernachlässigt.

Die Fig. 15 zeigt den Einsatz eines mehrteiligen Befestigungselementes 1 umfassend eine mehrschichtige Scheibe entsprechend den Fig. 11 und 12 sowie einen Tellerdübel entsprechend der Fig. 13 in einer weiteren bevorzugten Ausführungsform eines erfindungsgemäßen Fassadensystems. Das Befestigungselement 1 dient vorliegend der Befestigung einer Wärmedämmplatte 25 und eines plattenförmigen Bauelementes 2 am bauseitigen Untergrund 3. Bei dem plattenförmigen Bauelement 2 handelt es sich um eine Vermittlerplatte zur Ausbildung einer ebenen Anlagefläche für das Befestigungselement 1. Ferner ist über die stift-, pilzkopf-, haken- und/oder schlingenförmigen Verbindungselemente 8, 9, 15 eine Fassadenplatte als weiteres plattenförmiges Bauelement 10 über das Befestigungselement 1 am bauseitigen Untergrund 3 befestigt.

Alternativ oder ergänzend zu einer Vermittlerplatte kann auch die den tellerartigen Befestigungsabschnitt 4 ausbildende mehrschichtige Scheibe als Ausgleichselement eingesetzt werden, um beispielsweise etwaige Unebenheiten des Untergrundes auszugleichen. Vorzugsweise werden hierzu mehrere Scheiben mit unterschiedlich starkem Schichtaufbau vorgehalten und bei der Anbringung des Fassadensystems den örtlichen Gegebenheiten entsprechend ausgewählt. Darüber hinaus können unter die mehrschichtigen Scheiben auch weitere Scheiben - vorzugsweise jedoch ohne stift-, pilzkopf-, haken- und/oder schlingenförmige Verbindungselemente 8 -zum Ausgleich von Unebenheiten gelegt werden. Insofern kann auch das den tellerartigen ersten Befestigungsabschnitt 4 ausbildende erste Teil des Befestigungselementes 1 ein- oder mehrteilig ausgebildet sein.

Wie in der Fig. 15 ferner dargestellt, kann als Abstandshalter und/oder Ausgleichselement auch ein Trägerelement 11 Einsatz finden, das beidseits mit stift-, pilzkopf-, haken- und/oder schlingenförmigen Verbindungselementen 15 ausgestattet ist. Über diese ist das Trägerelement 11 sowohl mit den stift-, pilzkopf-, haken- und/oder schlingenförmigen Verbindungselementen 8 des den tellerartigen Befestigungsabschnitt 4 ausbildendenden ersten Teils des Befestigungselementes 1 als auch den stift-, pilzkopf-, haken- und/oder schlingenförmigen Verbindungselementen 9 des platten- oder profilförmigen Bauelements 10 bzw. der Fassadenplatte verbunden. Auch das Trägerelement 11 kann in verschiedenen Stärken vorgehalten werden, um durch die Wahl eines geeigneten Trägerelementes 11 unterschiedlichen Anforderungen Rechnung tragen zu können. Darüber hinaus können mehrere solcher Trägerelemente 11 zwischen dem Befestigungselement 1 und dem platten- oder profilförmigen Bauelement 10 angeordnet werden.

Ein mehrteiliges Befestigungselement 1 weist auch die in der Fig. 14 dargestellte bevorzugte Ausführungsform eines erfindungsgemäßen Fassadensystems auf. Im Unterschied zum Befestigungselement 1 der Ausführungsform der Fig.10, umfasst das Befestigungselement 1 der in der Fig. 14 dargestellten Ausführungsform ein mehrteilig ausgebildetes "zweites" Teil, das der Ausbildung des schaftartigen Befestigungsabschnitts 5 dient. Das Befestigungselement 1 weist demnach wenigstens drei Teile auf. Denn das vorliegend einteilig dargestellte, der Ausbildung des tellerartigen Befestigungsabschnitts 4 dienende "erste" Teil kann - wie im Zusammenhang mit dem Ausführungsbeispiel der Fig. 15 erläutert - auch mehrteilig ausgeführt sein.

Das den schaftartigen Befestigungsabschnitt 5 ausbildende Teil des Befestigungselementes 1 ist vorliegend wiederum aus zwei Teilen zusammengesetzt, wobei die Teile nachfolgend als Dübelteil und Flanschbauteil bezeichnet werden. Die zweiteilige Ausführung des den schaftartigen Befestigungsabschnitt 5 ausbildenden Teils des Befestigungselementes 1 ist deshalb erforderlich, da das Dübelteil außenumfangseitig schraubenartige Elemente besitzt, deren Außendurchmesser größer als der Innendurchmesser der Ausnehmung 4.1 des den tellerartigen Befestigungsabschnitt 4 ausbildenden Teils ist. Letzteres lässt sich demnach nicht ohne Weiteres auf den schaftartigen Befestigungsabschnitt 5 aufschieben, so dass der tellerartige Befestigungsabschnitt 4 an der ringförmigen Anlagefläche 5.1 des Befestigungselementes 1 anliegt. Die ringförmige Anlagefläche 5.1 ist daher vorliegend an einem separaten Teil, nämlich dem Flanschbauteil ausgebildet, so dass das den tellerartigen Befestigungsabschnitt 4 ausbildende Teil zunächst auf das Flanschbauteil geschoben wird und danach das Flanschbauteil mit dem Dübelteil verbunden wird. Das Dübelteil und das Flanschbauteil werden vorzugsweise über eine Schraub-, Steck- und/oder Rastverbindung miteinander verbunden. Nachdem sämtliche Teile des Befestigungselementes 1 miteinander verbunden worden sind, wird das Befestigungselement 1 in die Dämmplatte 25 des Fassadensystems eingesetzt und mittels einer als Verbindungsmittel 6 dienenden Schraube im bauseitigen Untergrund 3 verankert. Die außenumfangseitig am Dübelteil vorgesehenen schraubenartigen Elemente sollen im Übrigen einen Formschluss des Befestigungselementes 1 mit der Dämmplatte 25 bewirken.

Die insbesondere in den Fig. 10 und 15 dargestellten Ausführungsbeispiele eines erfindungsgemäßen Fassadensystems zeigen, dass ein mehrteiliges erfindungsgemäßes Befestigungselement 1 einen ein- oder mehrteiligen Tellerdübel zur Ausbildung des schaftartigen Befestigungsabschnitts 5 sowie wenigstens ein weiteres Teil zur Ausbildung des tellerartigen Befestigungsabschnitts 4 umfassen kann. Das den tellerartigen Befestigungsabschnitt 4 ausbildende weitere Teil kann beispielsweise nach Art einer Unterlegscheibe auf den Schaft des Tellerdübels geschoben und dieser dann wie ein herkömmlicher Tellerdübel zur Befestigung einer Dämmplatte 25 eingesetzt werden. Die an dem weiteren Teil vorgesehenen stift-, pilzkopf-, haken- und/oder schlingenförmigen Verbindungselemente 8 ermöglichen darüber hinaus die Befestigung eines platten- oder profilförmigen Bauelementes 10, welches hierzu ebenfalls mit stift-, pilzkopf-, haken- und/oder schlingenförmigen Verbindungselementen 9 ausgestattet ist.

Eine Weiterbildung der Ausführungsform der Fig. 15 ist in der Fig. 16 dargestellt. Das Befestigungselement 1 ist hier wiederum mehrteilig ausgeführt. Ein erstes Teil dient der Ausbildung des tellerartigen Befestigungsabschnitts 4 und ein zweites Teil dient der Ausbildung des schaftartigen Befestigungsabschnitts 5, wobei erstes und zweites Teil über ein drittes Teil verbindbar sind. Das dritte Teil ist topfartig ausgebildet und weist im Boden eine zentrale Ausnehmung auf, durch welche das den schaftartigen Befestigungsabschnitt 5 ausbildende zweite Teil hindurch steckbar ist, so dass das zweite Teil mit einer ringförmigen Anlagefläche 5.1 am Boden des dritten Teils anliegt. Außenumfangseitig weist das topfartige dritte Teil ein Gewinde 14 auf, das korrespondierend zu einem am ersten Teil vorgesehenen Innengewinde 13 ausgebildet ist. Über die Einschraubtiefe des ersten Teils ist demnach ein Abstand a zwischen dem aufzunehmenden platten- oder profilförmigen Bauelement 10 und der Dämmplatte 25 definierbar, um beispielsweise eine ausreichende Hinterlüftung der Fassadenkonstruktion zu gewährleisten. Zugleich kann die Schraubverbindung zwischen dem ersten und dem dritten Teil dem Ausgleich von Unebenheiten des bauseitigen Untergrundes 3 und/oder dem Ausgleich von Montagetoleranzen dienen. Die Einstellung des Abstandes a ist im Unterschied zum Ausführungsbeispiel der Fig. 15 zudem stufenlos möglich. Abweichend von der Darstellung der Fig. 16 können das zweite und dritte Teil auch einstückig ausgebildet sein. Ferner kann das erste Teil mit einem Außengewinde 14 und das dritte Teil bzw. das zweite Teil - sofern einstückig ausgebildet - mit einem Innengewinde 13 versehen sein. Anstelle einer Schraubverbindung ist alternativ auch eine Steck- und/oder Rastverbindung der Teile möglich.
Darüber hinaus kann das Befestigungsmittel 1 der Ausführungsform der Fig.16 lediglich das zur Ausbildung des tellerartigen Befestigungsabschnitts 4 vorgesehene erste Teil und das topfartige Teil umfassen, das in diesem Fall der Ausbildung des schaftartigen Befestigungsabschnitts 5 dient und mittels eines herkömmlichen Tellerdübels in einem bauseitigen Untergrund 3 verankerbar ist. Des Weiteren stellt auch das erste Teil allein bereits ein Befestigungselement 1 im Sinne der vorliegenden Erfindung dar, da es sowohl einen tellerartigen Befestigungsabschnitt 4, als auch einen schaftartigen Befestigungsabschnitt 5 umfasst.

### Bezugszeichenliste

- 1: Befestigungselement
- 2: platten- oder profilförmiges Bauelement, Wärmedämmplatte
- 3: bauseitiger Untergrund
- 4: tellerartiger Befestigungsabschnitt
4.1 Ausnehmung
4.2 Ausnehmung
- 5: schaftartiger Befestigungsabschnitt
5.1 Anlagefläche
- 6: Verbindungsmittel, Schraube
- 7: Befestigungselement
- 8: stift-, pilzkopf-, haken- und/oder schlingenförmige Verbindungselemente
- 9: stift-, pilzkopf-, haken- und/oder schlingenförmige Verbindungselemente
- 10: platten- oder profilförmiges Bauelement, Fassadenplatte
- 11: Trägerelement
- 12: schaftartiger Befestigungsabschnitt
- 13: Gewinde
- 14: Gewinde
- 15: stift-, pilzkopf-, haken- und/oder schlingenförmige Verbindungselemente
- 16: Vlies
- 17: Kompriband
- 18: schwertartig ausgebildeter Ansatz
- 19: Kante
- 20: Rahmen
- 21: Rahmen
- 22: Klaue
- 23: Gewinde
- 24: Abzieh-Werkzeug
- 25: Dämmplatte

## Patentansprüche

1. Fassadensystem, umfassend eine Dämmplatte (2), ein platten- oder profilförmiges Bauelement (10) und ein Befestigungssystem,
wobei das Befestigungssystem ein Befestigungselement (1) zur Befestigung der Dämmplatte (2) und des platten- oder profilförmigen Bauelements (10) an einem bauseitigen Untergrund (3) und ein Verbindungsmittel (6) umfasst, wobei das Befestigungselement (1) einen tellerartigen ersten Befestigungsabschnitt (4) und einen hieran angesetzten schaftartigen zweiten Befestigungsabschnitt (5) zur Aufnahme des Verbindungsmittels (6) umfasst, wobei der schaftartige zweite Befestigungsabschnitt (5) durch die Dämmplatte (2) hindurch geführt wird bis der tellerartige erste Befestigungsabschnitt (4) an der Dämmplatte (2) anliegt und das Verbindungsmittel (6) in den schaftartigen zweiten Befestigungsabschnitt (5) eingesetzt und unmittelbar oder mittelbar im bauseitigen Untergrund (3) verankert wird,
**dadurch gekennzeichnet, dass** die dem schaftartigen zweiten Befestigungsabschnitt (5) abgewandte Seite des tellerartigen ersten Befestigungsabschnitts (4) des Befestigungselements (1) stift-, pilzkopf-, haken- und/oder schlingenförmige Verbindungselemente (8) zur kraft- und/oder formschlüssigen Verbindung mit korrespondierenden stift-, pilzkopf-, haken- und/oder schlingenförmigen Verbindungselementen (9) am platten- oder profilförmigen Bauelement (10) aufweist.

2. Fassadensystem nach Anspruch 1,
**dadurch gekennzeichnet, dass** das Befestigungselement (1) mehrteilig, insbesondere zweiteilig, ausgeführt ist und der tellerartige erste Befestigungsabschnitt (4) an einem ersten Teil und der schaftartige zweite Befestigungsabschnitt (5) an einem zweiten Teil ausgebildet sind.

3. Fassadensystem nach Anspruch 2,
**dadurch gekennzeichnet, dass** das den tellerartigen ersten Befestigungsabschnitt (4) ausbildende erste Teil eine Ausnehmung (4.1) zur Aufnahme des den schaftartigen zweiten Befestigungsabschnitt (5) ausbildenden zweiten Teils besitzt.

4. Fassadensystem nach Anspruch 2 oder 3,
**dadurch gekennzeichnet, dass** das den schaftartigen zweiten Befestigungsabschnitt (5) ausbildende zweite Teil eine im Wesentlichen radial verlaufende Anlagefläche (5.1) zur Anlage an dem den tellerartigen ersten Befestigungsabschnitt (4) ausbildenden ersten Teil besitzt.

5. Fassadensystem nach einem der vorhergehenden Ansprüche,
**dadurch gekennzeichnet, dass** die stift-, pilzkopf-, haken- und/oder schlingenförmigen Verbindungselemente (8) an den tellerartigen ersten Befestigungsabschnitt (4) angeformt oder mittelbar über ein gemeinsames Trägerelement (11) mit dem tellerartigen ersten Befestigungsabschnitt (4), vorzugsweise stoffschlüssig, zum Beispiel über eine Klebe-, Schweiß-, Löt- oder Nietverbindung, verbunden sind.

6. Fassadensystem nach einem der vorhergehenden Ansprüche,
**dadurch gekennzeichnet, dass** der schaftartige zweite Befestigungsabschnitt (5) zur Aufnahme des Verbindungsmittels (6), insbesondere einer Schraube, eines Ankerbolzens oder eines schaftartigen Befestigungsabschnitts (12) eines weiteren Befestigungselements (7), hülsenförmig ausgebildet ist.

7. Fassadensystem nach einem der vorhergehenden Ansprüche,
**dadurch gekennzeichnet, dass** der schaftartige zweite Befestigungsabschnitt (5) ein Gewinde (13) und/oder Rastelemente aufweist, das bzw. die in Eingriff mit einem korrespondierenden Gewinde (14) oder korrespondierenden Rastelementen eines Verbindungsmittels (6), insbesondere einer Schraube, eines Ankerbolzens oder eines schaftartigen Befestigungsabschnitts (12) eines weiteren Befestigungselements (7), bringbar ist bzw. sind.

8. Fassadensystem nach einem der vorhergehenden Ansprüche,
**dadurch gekennzeichnet, dass** das Befestigungssystem eine Schraube oder einen Ankerbolzen als Verbindungsmittel (6) umfasst.

9. Fassadensystem nach einem der vorhergehenden Ansprüche,
**dadurch gekennzeichnet, dass** die stift-, pilzkopf-, haken- oder schlingenförmigen Verbindungselemente (9) des platten- oder profilförmigen Bauelements (10) durch das Bauelement selbst ausgeformt werden oder mittelbar über ein gemeinsames Trägerelement (11) mit dem platten- oder profilförmigen Bauelement (10), vorzugsweise stoffschlüssig, zum Beispiel über eine Klebe-, Schweiß-, Löt- oder Nietverbindung, verbunden sind.

10. Fassadensystem nach einem der vorhergehenden Ansprüche,
**dadurch gekennzeichnet, dass** das plattenförmige Bauelement (10) als Gewebe, Gelege, Gewirke oder Vlies ausgebildet und als Armierung für eine bereits aufgetragene oder noch aufzutragende Beschichtungsmasse einsetzbar ist.

11. Fassadensystem nach einem der vorhergehenden Ansprüche,
**dadurch gekennzeichnet, dass** zwischen einem Befestigungselement (1, 7) und einem platten- oder profilförmigen Bauelement (10) ein Trägerelement (11) mit stift-, pilzkopf-, haken- und/oder schlingenförmigen Verbindungselementen (15) zur kraft- und/oder formschlüssigen Verbindung mit den stift-, pilzkopf-, haken- und/oder schlingenförmigen Verbindungselementen (8, 9) des Befestigungselements (1, 7) und des platten- oder profilförmigen Bauelements (10) eingelegt ist.

12. Fassadensystem nach einem der vorhergehenden Ansprüche,
**dadurch gekennzeichnet, dass** das platten- oder profilförmige Bauelement (10) ein Trägerprofil, insbesondere ein Agraffenprofil, zur Befestigung eines platten- oder profilförmigen Fassadenelements ist.

13. Verfahren zur Herstellung eines Fassadensystems nach einem der vorhergehenden Ansprüche, umfassend die Verfahrensschritte:
- Befestigen wenigstens einer Dämmplatte (2, 25) an einem bauseitigen Untergrund (3)
i) mittels eines Befestigungselements (1), das einen tellerartigen ersten Befestigungsabschnitt (4) und einen hieran angesetzten schaftartigen zweiten Befestigungsabschnitt (5) zur Aufnahme eines Verbindungsmittels (6) umfasst, wobei der schaftartige zweite Befestigungsabschnitt (5) durch die Dämmplatte (2, 25) hindurch geführt wird bis der tellerartige erste Befestigungsabschnitt (4) an der Dämmplatte (2, 25) anliegt,
ii) mittels des Verbindungsmittels (6), beispielsweise in Form einer Schraube oder eines Ankerbolzens, das in den schaftartigen zweiten Befestigungsabschnitt (5) des Befestigungselements (1) eingesetzt und unmittelbar oder mittelbar im bauseitigen Untergrund (3) verankert wird,
wobei das Verfahren durch den folgenden Verfahrensschritt gekennzeichnet wird:
- Verbinden stift-, pilzkopf-, haken- und/oder schlingenförmiger Verbindungselemente (8), die der tellerartige erste Befestigungsabschnitt (4) des Befestigungselements (1) auf der dem schaftartigen zweiten Befestigungsabschnitt (5) abgewandten Seite aufweist, mit korrespondierenden Verbindungselementen (9) an einem platten- oder profilförmigen Bauelement (10) durch Inkontaktbringen und Andrücken des platten- oder profilförmigen Bauelements (10) an das Befestigungselement (1), wobei die Verbindungselemente (9) des platten- oder profilförmigen Bauelementes (10) zumindest teilweise in Überdeckung mit den Verbindungselementen (8) des Befestigungselements (1) gebracht werden.

14. Verfahren zur Herstellung eines Fassadensystems nach einem der Ansprüche 1-12, umfassend die Verfahrensschritte:
- Befestigen wenigstens einer Dämmplatte (2, 25) an einem bauseitigen Untergrund (3)
i) mittels eines mehrteiligen, insbesondere zweiteiligen, Befestigungselements (1), das einen tellerartigen ersten Befestigungsabschnitt (4) und einen hieran angesetzten schaftartigen zweiten Befestigungsabschnitt (5) zur Aufnahme eines Verbindungsmittels (6) umfasst,
wobei der tellerartige erste Befestigungsabschnitt (4) an einem ersten Teil und der schaftartige zweite Befestigungsabschnitt (5) an einem zweiten Teil ausbildet sind,
wobei zunächst die Teile des Befestigungselements (1) verbunden werden, sofern diese nicht bereits verbunden sind, danach das den schaftartigen zweiten Befestigungsabschnitt (5) ausbildende zweite Teil durch die Dämmplatte (2, 25) hindurch geführt wird bis das den tellerartigen ersten Befestigungsabschnitt (4) ausbildende Teil an der Dämmplatte (2, 25) anliegt,
ii) mittels eines Verbindungsmittels (6), beispielsweise in Form einer Schraube oder eines Ankerbolzens, das in das den schaftartigen zweiten Befestigungsabschnitt (5) ausbildende zweite Teil eingesetzt und unmittelbar oder mittelbar im bauseitigen Untergrund (3) verankert wird,
wobei das Verfahren durch den folgenden Verfahrensschritt gekennzeichnet wird:
- Verbinden stift-, pilzkopf-, haken- und/oder schlingenförmiger Verbindungselemente (8), die der tellerartige erste Befestigungsabschnitt (4)des ersten Teils des Befestigungselements (1) aufweist, mit korrespondierenden stift-, pilzkopf-, haken- und/oder schlingenförmigen Verbindungselementen (9) an einem platten- oder profilförmigen Bauelement (10) durch Inkontaktbringen und Andrücken des platten- oder profilförmigen Bauelements (10) an das Befestigungselement (1), wobei die Verbindungselemente (9) des platten- oder profilförmigen Bauelements (10) zumindest teilweise in Überdeckung mit den Verbindungselementen (8) des Befestigungselements (1) gebracht werden.

## Claims

1. A façade system comprising an insulating board (2), a plate- or profile-shaped component (10) and a fastening system, wherein the fastening system comprises a fastening element (1) for fastening the insulating board (2) and the plate- or profile-shaped component (10) to an on-site substrate (3) and a connection means (6), wherein the fastening element (1) comprises a plate-shaped first fastening portion (4) and a shaft-like second fastening portion (5) attached to the latter for receiving the connection means (6), wherein the shaft-like second fastening portion (5) is passed through the insulating board (2) until the plate-shaped first fastening portion (4) abuts against the insulating board (2) and the connection means (6) is inserted into the shaft-like second fastening portion (5) and is anchored directly or indirectly in the on-site substrate (3),
**characterised in that** the side of the plate-shaped first fastening portion (4) of the fastening element (1) facing away from the shaft-like second fastening portion (5) comprises pin-shaped, mushroom-shaped, hook-shaped and/or loop-shaped connection elements (8) for the friction-locked and/or form-fit connection to corresponding pin-shaped, mushroom-shaped, hook-shaped and/or loop-shaped connection elements (9) on the plate- or profile-shaped component (10).

2. The façade system according to claim 1,
**characterised in that** the fastening element (1) is constituted multi-part, in particular two-part, and the plate-shaped first fastening portion (4) is formed on a first part and the shaft-like second fastening portion (5) on a second part.

3. The façade system according to claim 2,
**characterised in that** the first part forming the plate-shaped first fastening portion (4) has a recess (4.1) for receiving the second part forming the shaft-like second fastening portion (5).

4. The façade system according to claim 2 or 3,
**characterised in that** the second part forming the shaft-like second fastening portion (5) has an abutment surface (5.1) running essentially radially for abutment with the first part forming the plate-shaped first fastening portion (4).

5. The façade system according to any one of the preceding claims,
**characterised in that** the pin-shaped, mushroom-shaped, hook-shaped and/or loop-shaped connection elements (8) are integrally formed on the plate-shaped first fastening portion (4) or are connected indirectly via a common support element (11) to the plate-shaped first fastening portion (4), preferably in a firmly bonded manner, for example by means of an adhesive, weld, solder or rivet connection.

6. The façade system according to any one of the preceding claims,
**characterised in that** the shaft-like second fastening portion (5) is formed sleeve-shaped for receiving the connection means (6), in particular a screw, an anchor bolt or a shaft-like fastening portion (12) of a further fastening element (7).

7. The façade system according to any one of the preceding claims,
**characterised in that** the shaft-like second fastening portion (5) comprises a thread (13) and/or latching elements, which are or can be engaged with a corresponding thread (14) or corresponding latching elements of a connection means (6), in particular a screw, an anchor bolt or a shaft-like fastening portion (12) of a further fastening element (7).

8. The façade system according to any one of the preceding claims,
**characterised in that** the fastening system comprises a screw or an anchor bolt as a connection means (6).

9. The façade system according to any one of the preceding claims,
**characterised in that** the pin-shaped, mushroom-shaped, hook-shaped or loop-shaped connection elements (9) of the plate- or profile-shaped component (10) are integrally formed by the component itself or are connected indirectly via a common support element (11) to the plate- or profile-shaped component (10), preferably in a firmly bonded manner, for example by means of an adhesive, weld, solder or rivet connection.

10. The façade system according to any one of the preceding claims,
**characterised in that** the plate-shaped component (10) is formed as a woven fabric, scrim, knitted or non-woven fabric and can be used as reinforcement for an already applied coating compound or a coating compound yet to be applied.

11. The façade system according to any one of the preceding claims,
**characterised in that** there is inserted between a fastening element (1, 7) and a plate- or profile-shaped component (10) a support element (11) with pin-shaped, mushroom-shaped, hook-shaped and/or loop-shaped connection elements (15) for the friction-locked or form-fit connection to the pin-shaped, mushroom-shaped, hook-shaped and/or loop-shaped connection elements (8, 9) of the fastening element (1, 7) and of the plate- or profile-shaped component (10).

12. The façade system according to any one of the preceding claims,
**characterised in that** the plate- or profile-shaped component (10) is a support profile, in particular a clasp profile, for fastening a plate- or profile-shaped façade element.

13. A method for producing a façade system according to any one of the preceding claims, comprising the process steps:
- fastening of at least one insulating board (2, 25) to an on-site substrate (3)
i) by means of a fastening element (1), which comprises a plate-shaped first fastening portion (4) and a shaft-like second fastening portion (5) attached to the latter for receiving a connection means (6), wherein the shaft-like second fastening portion (5) is passed through the insulating board (2, 25) until the plate-shaped first fastening portion (4) abuts against the insulating board (2, 25),
ii) by means of the fastening means (6) for example in the form of a screw or an anchor bolt, which is inserted into the shaft-like second fastening portion (5) of the fastening element (1) and anchored directly or indirectly in the on-site substrate (3),
wherein the method is **characterised by** the following process step:
- connection of pin-shaped, mushroom-shaped, hook-shaped and/or loop-shaped connection elements (8), which the plate-shaped first fastening portion (4) of the fastening element (1) comprises on the side facing away from the shaft-like second fastening portion (5), to corresponding connection elements (9) on a plate- or profile-shaped component (10) by bringing the latter into contact and pressing the plate- or profile-shaped component (10) against the fastening element (1), wherein the connection elements (9) of the plate- or profile-shaped component (10) are brought at least partially into congruence with the connection elements (8) of the fastening element (1).

14. The method for producing a façade system according to any one of claims 1-12,
comprising the process steps:
- fastening of at least one insulating board (2, 25) to an on-site substrate (3)
i) by means of a multi-part, in particular two-part fastening element (1), which comprises a plate-shaped first fastening portion (4) and a shaft-like second fastening portion (5) attached to the latter for receiving a connection means (6),
wherein the plate-shaped first fastening portion (4) is formed on a first part and the shaft-like second fastening portion (5) is formed on a second part,
wherein the parts of the fastening element (1) are first connected, if the latter are not already connected, after which the second part forming the shaft-like second fastening portion (5) is passed through the insulating board (2, 25) until the part forming the plate-shaped first fastening portion (4) abuts against the insulating board (2, 25),
ii) by means of a connection means (6), for example in the form of a screw or an anchor bolt, which is inserted into the second part forming the shaft-like second fastening portion (5) and anchored directly or indirectly to the on-site substrate (3),
wherein the method is **characterised by** the following process step:
- connection of pin-shaped, mushroom-shaped, hook-shaped and/or loop-shaped connection elements (8), which the plate-shaped first fastening portion (4) of the first part of the fastening element (1) comprises, to corresponding pin-shaped, mushroom-shaped, hook-shaped and/or loop-shaped connection elements (9) on a plate- or profile-shaped component (10) by bringing the latter into contact and pressing the plate- or profile-shaped component (10) against the fastening element (1), wherein the connection elements (9) of the plate- or profile-shaped component (10) are brought at least partially into congruence with the contact elements (8) of the fastening element (1).

## Revendications

1. Système de façade, comprenant une plaque d'isolation (2), un composant (10) en forme de plaque ou de profilé et un système de fixation,
sachant que le système de fixation comprend un élément de fixation (1) pour fixer la plaque d'isolation (2) et le composant (10) en forme de plaque ou de profilé à un fond (3) du côté construction et un moyen de liaison (6),
sachant que l'élément de fixation (1) comprend une première section de fixation (4) de type plateau et une deuxième section de fixation (5) de type queue fixée à celle-ci pour loger un moyen de liaison (6),
sachant que la deuxième section de fixation (5) de type queue est passée à travers la plaque d'isolation (2) jusqu'à ce que la première section de fixation (4) de type plateau s'applique à la plaque d'isolation (2) et le moyen de liaison (6) est introduit dans la deuxième section de fixation (5) de type queue et est directement ou indirectement ancré dans le fond (3) du côté construction,
**caractérisé en ce que**
le côté opposé à la deuxième section de fixation (5) de type queue de la première section de fixation (4) de type plateau de l'élément de fixation (1) comporte des éléments de liaison (8) en forme de tige, de champignon, de crochet et/ou de boucle pour la liaison par conformité de force et/ou de forme avec des éléments de liaison (9) en forme de tige, de champignon, de crochet et/ou de boucle correspondants sur le composant (10) en forme de plaque ou de profilé.

2. Système de façade selon la revendication 1,
**caractérisé en ce que** l'élément de fixation (1) est exécuté en plusieurs parties, en particulier en deux parties et la première section de fixation (4) de type plateau est constituée sur une première partie et la deuxième section de fixation (5) de type queue sur une deuxième partie.

3. Système de façade selon la revendication 2,
**caractérisé en ce que** la première partie constituant la première section de fixation (4) de type plateau possède un évidement (4.1) pour loger la deuxième partie constituant la deuxième section de fixation (5) de type queue.

4. Système de façade selon la revendication 2 ou 3,
**caractérisé en ce que** la deuxième partie constituant la deuxième section de fixation (5) de type queue possède une surface d'appui (5.1) passant pour l'essentiel radialement pour application à la première partie constituant la première section de fixation (4) de type plateau.

5. Système de façade selon l'une quelconque des revendications précédentes,
**caractérisé en ce que** les éléments de liaison (8) en forme de tige, de champignon, de crochet et/ou de boucle sont conformés sur la première section de fixation (4) de type plateau ou sont reliés indirectement par un élément de support (11) commun à la première section de fixation (4) de type plateau, de préférence par conformité de matière, par exemple pour une liaison par collage, soudage, brasage ou rivetage.

6. Système de façade selon l'une quelconque des revendications précédentes,
**caractérisé en ce que** la deuxième section de fixation (5) de type queue est constituée en forme de manchon pour loger le moyen de liaison (6), en particulier une vis, un boulon d'ancrage ou une section de fixation (12) de type queue d'un autre élément de fixation (7).

7. Système de façade selon l'une quelconque des revendications précédentes,
**caractérisé en ce que** la deuxième section de fixation (5) de type queue comporte un filetage (13) et/ou des éléments à crans, qui peut ou peuvent être mis en prise avec un filetage (14) correspondant ou des éléments à crans correspondants d'un moyen de liaison (6), en particulier une vis, un boulon d'ancrage ou une section de fixation (12) de type queue d'un autre élément de fixation (7).

8. Système de façade selon l'une quelconque des revendications précédentes,
**caractérisé en ce que** le système de fixation comprend une vis ou un boulon d'ancrage en tant que moyen de liaison (6).

9. Système de façade selon l'une quelconque des revendications précédentes,
**caractérisé en ce que** les éléments de liaison (9) en forme de tige, de champignon, de crochet et/ou de boucle du composant (10) en forme de plaque ou de profilé sont formés par le composant même ou sont reliés indirectement par un élément de support (11) commun au composant (10) en forme de plaque ou de profilé, de préférence par conformité de matière, par exemple par liaison par collage, soudage, brasage ou rivetage.

10. Système de façade selon l'une quelconque des revendications précédentes,
**caractérisé en ce que** le composant en forme de plaque (10) est constitué sous la forme de tissu, de nappe, de tissu maillé ou de non-tissé et peut être utilisé en tant qu'armature pour une masse d'enduction déjà appliquée ou encore à appliquer.

11. Système de façade selon l'une quelconque des revendications précédentes,
**caractérisé en ce qu'**un élément de support (11) avec des éléments de liaison (15) en forme de tige, de champignon, de crochet et/ou de boucle est introduit entre un élément de fixation (1, 7) et un composant (10) en forme de plaque ou de profilé pour la liaison par conformité de force et/ou de forme avec des éléments de liaison (8, 9) en forme de tige, de champignon, de crochet et/ou de boucle de l'élément de fixation (1, 7) et du composant (10) en forme de plaque ou de profilé .

12. Système de façade selon l'une quelconque des revendications précédentes,
**caractérisé en ce que** le composant (10) en forme de plaque ou de profilé est un profilé de support, en particulier un profilé d'agrafage pour la fixation d'un élément de façade en forme de plaque ou de profilé.

13. Procédé de fabrication d'un système de façade selon l'une quelconque des revendications précédentes comprenant les étapes de procédé :
- fixation d'au moins une plaque d'isolation (2, 25) à un fond (3) du côté construction,
i) au moyen d'un élément de fixation (1), qui comprend une première section de fixation (4) de type plateau et une deuxième section de fixation (5) de type queue fixée à celle-ci pour loger un moyen de liaison (6), sachant que la deuxième section de fixation (5) de type queue est passée à travers la plaque d'isolation (2, 25) jusqu'à ce que la première section de fixation (4) de type plateau s'applique à la plaque d'isolation (2, 25),
ii) au moyen du moyen de liaison (6), par exemple sous la forme d'une vis ou d'un boulon d'ancrage, qui est introduit dans la deuxième section de fixation (5) de type queue de l'élément de fixation (1) et est ancré directement ou indirectement dans le fond (3) du côté construction,
sachant que le procédé est **caractérisé par** l'étape de procédé suivante :
- assemblage d'éléments de liaison (8) en forme de tige, de champignon, de crochet et/ou de boucle, que comporte la première section de fixation (4) de type plateau du premier élément de fixation (1) sur le côté opposé à la deuxième section de fixation (5) de type queue avec des éléments de liaison (9) correspondants sur un composant (10) en forme de plaque ou de profilé par mise en contact et pression du composant (10) en forme de plaque ou de profilé contre l'élément de fixation (1), sachant que les éléments de liaison (9) du composant (10) en forme de plaque ou de profilé sont mis au moins en partie en superposition avec les éléments de liaison (8) de l'élément de fixation (1).

14. Procédé de fabrication d'un système de façade selon l'une quelconque des revendications 1-12, comprenant les étapes de procédé de :
- fixation d'au moins une plaque d'isolation (2, 25) à un fond (3) du côté construction,
i) au moyen d'un élément de fixation (1) en plusieurs parties, en particulier en deux parties, qui comprend une première section de fixation (4) de type plateau et une deuxième section de fixation (5) de type queue fixé à celle-ci pour loger un moyen de liaison (6),
sachant que la première section de fixation (4) de type plateau est constituée sur une première partie et la deuxième section de fixation de type queue (5) sur une deuxième partie, sachant d'abord que les parties de l'élément de fixation (1) sont reliés, dans la mesure où ceux-ci ne sont pas déjà reliés, la deuxième partie constituant la deuxième section de fixation (5) de type queue est ensuite passée à travers la plaque d'isolation (2, 25) jusqu'à ce que la partie constituant la première section de fixation (4) de type plateau s'applique à la plaque d'isolation (2, 25),
ii) au moyen d'un moyen de liaison (6), par exemple sous la forme d'une vis ou d'un boulon d'ancrage, qui est introduit dans la deuxième partie constituant la deuxième section de fixation (5) de type queue et est directement ou indirectement ancré dans le fond (3) du côté construction,
sachant que le procédé est **caractérisé par** l'étape de procédé suivante :
- assemblage d'éléments de liaison (8) en forme de tige, de champignon, de crochet et/ou de boucle, que comporte la première section de fixation (1) de type plateau de la première partie de l'élément de fixation (4), avec des éléments de liaison (9) correspondants en forme de queue, de champignon, de et/ou de boucle à un composant (10) en forme de plaque ou de profilé par mise en contact et pression du composant (10) en forme de plaque ou de profilé contre l'élément de fixation (1), sachant que les éléments de liaison (9) du composant (10) en forme de plaque ou de profilé sont mis au moins en partie en superposition avec les éléments de liaison (8) de l'élément de fixation (1).
